(19) Europäisches Patentamt
European Patent Office
Office européen des brevets

(11) **EP 3 200 501 A1**

(12) **EUROPEAN PATENT APPLICATION**
published in accordance with Art. 153(4) EPC

(43) Date of publication:
**02.08.2017 Bulletin 2017/31**

(51) Int Cl.:
**H04W 24/08** *(2009.01)*

(21) Application number: **14904824.1**

(22) Date of filing: **30.10.2014**

(86) International application number:
**PCT/CN2014/089852**

(87) International publication number:
**WO 2016/065562 (06.05.2016 Gazette 2016/18)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Huawei Technologies Co., Ltd. Longgang District Shenzhen, Guangdong 518129 (CN)**

(72) Inventors:
• **LI, Qiang Shenzhen Guangdong 518129 (CN)**

• **WU, Yuchun Shenzhen Guangdong 518129 (CN)**
• **LI, Chao Shenzhen Guangdong 518129 (CN)**

(74) Representative: **Thun, Clemens Mitscherlich PartmbB Patent- und Rechtsanwälte Sonnenstraße 33 80331 München (DE)**

(54) **METHOD, APPARATUS AND SYSTEM FOR MANAGING RADIO RESOURCES**

(57) Embodiments of the present invention provide a radio resource management method, apparatus, and system and relate to the field of wireless communications technologies. The apparatus includes: a determining module, configured to determine that a state of a secondary cell for user equipment UE needs to be changed to an uplink-enabled and downlink-disabled state; and a change module, configured to change the state of the secondary cell, so that the state of the secondary cell is the uplink-enabled and downlink-disabled state, where when the state of the secondary cell is the uplink-enabled and downlink-disabled state, an uplink signal can be received in the secondary cell by a base station to which the secondary cell belongs, a downlink signal can be transmitted by the base station to which the secondary cell belongs only in a subframe for transmitting a discovery reference signal DRS in the secondary cell, the uplink signal includes at least one of an uplink reference signal, uplink control signaling, or uplink data, and the downlink signal includes at least one of a downlink reference signal, downlink control signaling, or downlink data. The present invention reduces power overheads and interference of a base station.

FIG. 1

**Description**

**TECHNICAL FIELD**

The present invention relates to the field of wireless communications technologies, and in particular, to a radio resource management method, apparatus, and system.

**BACKGROUND**

Based on a carrier aggregation (Carrier Aggregation, CA for short) technology, cells (Cell) in which a base station serves a UE are classified into a primary cell (Primary Cell, PCell for short) and a secondary cell (Secondary Cell, SCell for short). The primary cell is a cell, in which radio resource control (Radio Resource Control, RRC for short) is established, of serving cells for a UE. The secondary cell is a cell, other than the primary cell, of the serving cells for the UE.

Long Term Evolution (Long Term Evolution, LTE for short) provides a secondary cell activation/deactivation (Activation/Deactivation) mechanism. When a secondary cell is activated, a UE can transmit and receive data in the secondary cell. When a secondary cell is deactivated, a UE does not transmit or receive data in the secondary cell.

When a secondary cell is activated, the secondary cell is in an enabled state, a base station to which the secondary cell belongs still needs to transmit some other signals in addition to receiving data transmitted by a UE and transmitting data required by the UE, which sometimes causes unnecessary power overheads and interference.

**SUMMARY**

To resolve prior-art problems of a network resource waste and interference to a network, embodiments of the present invention provide a radio resource management method, apparatus, and system. The technical solutions are as follows:

According to a first aspect, an embodiment of the present invention provides a radio resource management apparatus, where the apparatus includes:

a determining module, configured to determine that a state of a secondary cell for user equipment UE needs to be changed to an uplink-enabled and downlink-disabled state; and

a change module, configured to change the state of the secondary cell, so that the state of the secondary cell is the uplink-enabled and downlink-disabled state, where

when the state of the secondary cell is the uplink-enabled and downlink-disabled state, an uplink signal that is transmitted by the UE by using the secondary cell to a base station to which the secondary cell belongs can be received by the base station to which the secondary cell belongs, and a downlink signal that is to be transmitted, to the UE by using the secondary cell, by the base station to which the secondary cell belongs can be transmitted only in a subframe for transmitting a discovery reference signal DRS, where the uplink signal includes at least one of an uplink reference signal, uplink control signaling, or uplink data, and the downlink signal includes at least one of a downlink reference signal, downlink control signaling, or downlink data.

In a possible implementation manner of the present invention, the determining module includes:

a current-state obtaining unit, configured to obtain a current state of the secondary cell for the UE;

a network state obtaining unit, configured to obtain a network state of a serving cell for the UE, where the serving cell includes a primary cell and the secondary cell that are for the UE; and

a determining unit, configured to determine, according to the current state of the secondary cell and the network state of the serving cell, that the state of the secondary cell needs to be changed to the uplink-enabled and downlink-disabled state.

Specifically, the network state of the serving cell includes one or more types of the following information:

whether currently there is uplink data and downlink data that are to be transmitted in the secondary cell;
volumes of uplink data and downlink data that are to be transmitted in the primary cell currently; or
uplink interference values and downlink interference values that are transmitted in the primary cell and the secondary cell currently.

Optionally, the determining unit is configured to:

when the current state of the secondary cell is an uplink-disabled and downlink-disabled state, an uplink-enabled and downlink-enabled state, or an uplink-disabled and downlink-enabled state and the network state of the serving cell meets any one of the following conditions, determine that the state of the secondary cell needs to be changed to the uplink-enabled and downlink-disabled state:

currently there is uplink data to be transmitted in the secondary cell and currently there is no downlink data to be transmitted in the secondary cell;
a volume of uplink data to be transmitted in the primary cell currently is greater than or equal to an uplink transmission threshold and a volume of downlink data to be transmitted in the primary cell currently is less than a downlink transmission threshold; or
an uplink interference value transmitted in the secondary cell currently is less than an uplink interference value transmitted in the primary cell currently, and a downlink interference value transmitted in the secondary cell currently is greater than or equal to a downlink interference value transmitted in the primary cell currently.

In another possible implementation manner of the present invention, the change module is configured to:

switch the state of the secondary cell to the uplink-enabled and downlink-disabled state if the serving base station and the base station to which the secondary cell belongs are a same base station; or
transmit a control instruction if the serving base station and the base station to which the secondary cell belongs are different base stations, where the control instruction is used to instruct the base station to which the secondary cell belongs to switch the state of the secondary cell to the uplink-enabled and downlink-disabled state.

In still another possible implementation manner of the present invention, the apparatus further includes:

an uplink activation transmission module, configured to transmit uplink activation signaling to the UE, where the uplink activation signaling is used to instruct the UE to perform uplink activation on the secondary cell.

In yet another possible implementation manner of the present invention, the apparatus further includes:

a downlink deactivation transmission module, configured to transmit downlink deactivation signaling to the UE, where the downlink deactivation signaling is used to instruct the UE to perform downlink deactivation on the secondary cell.

In still yet another possible implementation manner of the present invention, the apparatus further includes:

an uplink grant transmission module, configured to: when the state of the secondary cell is the uplink-enabled and downlink-disabled state, transmit, in another cell except the secondary cell of the serving cell for the UE, uplink grant signaling of the secondary cell to the UE, where the serving cell includes the primary cell and the secondary cell that are for the UE; or
when the state of the secondary cell is the uplink-enabled and downlink-disabled state, transmit the uplink grant signaling to the UE in the subframe for transmitting the DRS in the secondary cell, where
the uplink grant signaling is used to schedule transmission of the uplink data in the secondary cell.

In a further possible implementation manner of the present invention, the apparatus further includes:

a feedback transmission module, configured to: when the state of the secondary cell is the uplink-enabled and downlink-disabled state, transmit, in the another cell except the secondary cell of the serving cell, feedback signaling to the UE, where the serving cell includes the primary cell and the secondary cell that are for the UE; or
when the state of the secondary cell is the uplink-enabled and downlink-disabled state, transmit the feedback signaling to the UE in the subframe for transmitting the DRS in the secondary cell, where
the feedback signaling is used to feed back whether the base station to which the secondary cell belongs correctly receives the uplink data transmitted by the UE.

According to a second aspect, an embodiment of the present invention provides a radio resource management apparatus, where the apparatus includes:

a processor, configured to: determine that a state of a secondary cell for user equipment UE needs to be changed to an uplink-enabled and downlink-disabled state; and change the state of the secondary cell, so that the state of the secondary cell is the uplink-enabled and downlink-disabled state, where

when the state of the secondary cell is the uplink-enabled and downlink-disabled state, an uplink signal that is transmitted by the UE by using the secondary cell to a base station to which the secondary cell belongs can be received by the base station to which the secondary cell belongs, and a downlink signal that is to be transmitted, to the UE by using the secondary cell, by the base station to which the secondary cell belongs can be transmitted only in a subframe for transmitting a discovery reference signal DRS, where the uplink signal includes at least one of an uplink reference signal, uplink control signaling, or uplink data, and the downlink signal includes at least one of a downlink reference signal, downlink control signaling, or downlink data.

In a possible implementation manner of the present invention, the processor is configured to:

obtain a current state of the secondary cell for the UE;
obtain a network state of a serving cell for the UE, where the serving cell includes a primary cell and the secondary cell that are for the UE; and
determine, according to the current state of the secondary cell and the network state of the serving cell, that the state of the secondary cell needs to be changed to the uplink-enabled and downlink-disabled state.

Specifically, the network state of the serving cell includes one or more types of the following information:

whether currently there is uplink data and downlink data that are to be transmitted in the secondary cell;
volumes of uplink data and downlink data that are to be transmitted in the primary cell currently; or
uplink interference values and downlink interference values that are transmitted in the primary cell and the secondary cell currently.

Optionally, the processor is configured to:

when the current state of the secondary cell is an uplink-disabled and downlink-disabled state, an uplink-enabled and downlink-enabled state, or an uplink-disabled and downlink-enabled state and the network state of the serving cell meets any one of the following conditions, determine that the state of the secondary cell needs to be changed to the uplink-enabled and downlink-disabled state:

currently there is uplink data to be transmitted in the secondary cell and currently there is no downlink data to be transmitted in the secondary cell;
a volume of uplink data to be transmitted in the primary cell currently is greater than or equal to an uplink transmission threshold and a volume of downlink data to be transmitted in the primary cell currently is less than a downlink transmission threshold; or
an uplink interference value transmitted in the secondary cell currently is less than an uplink interference value transmitted in the primary cell currently, and a downlink interference value transmitted in the secondary cell currently is greater than or equal to a downlink interference value transmitted in the primary cell currently.

In another possible implementation manner of the present invention, the processor is configured to:

switch the state of the secondary cell to the uplink-enabled and downlink-disabled state if the serving base station and the base station to which the secondary cell belongs are a same base station; or
transmit a control instruction if the serving base station and the base station to which the secondary cell belongs are different base stations, where the control instruction is used to instruct the base station to which the secondary cell belongs to switch the state of the secondary cell to the uplink-enabled and downlink-disabled state.

In still another possible implementation manner of the present invention, the apparatus further includes:

a transmitter, configured to transmit uplink activation signaling to the UE, where the uplink activation signaling is used to instruct the UE to perform uplink activation on the secondary cell.

In yet another possible implementation manner of the present invention, the apparatus further includes:

the transmitter, configured to transmit downlink deactivation signaling to the UE, where the downlink deactivation signaling is used to instruct the UE to perform downlink deactivation on the secondary cell.

In still yet another possible implementation manner of the present invention, the apparatus further includes:

the transmitter, configured to: when the state of the secondary cell is the uplink-enabled and downlink-disabled state, transmit, in another cell except the secondary cell of the serving cell for the UE, uplink grant signaling of the secondary cell to the UE, where the serving cell includes the primary cell and the secondary cell that are for the UE; or when the state of the secondary cell is the uplink-enabled and downlink-disabled state, transmit the uplink grant signaling to the UE in the subframe for transmitting the DRS in the secondary cell, where
the uplink grant signaling is used to schedule transmission of the uplink data in the secondary cell.

In a further possible implementation manner of the present invention, the apparatus further includes:

the transmitter, configured to: when the state of the secondary cell is the uplink-enabled and downlink-disabled state, transmit, in the another cell except the secondary cell of the serving cell, feedback signaling to the UE, where the serving cell includes the primary cell and the secondary cell that are for the UE; or
when the state of the secondary cell is the uplink-enabled and downlink-disabled state, transmit the feedback signaling to the UE in the subframe for transmitting the DRS in the secondary cell, where
the feedback signaling is used to feed back whether the base station to which the secondary cell belongs correctly receives the uplink data transmitted by the UE.

According to a third aspect, an embodiment of the present invention provides a radio resource management apparatus, where the apparatus includes:

an uplink activation receiving module, configured to: when user equipment UE works in an uplink-deactivated and downlink-deactivated state of a secondary cell, receive uplink activation signaling transmitted by a serving base station for the UE; and
an uplink activation module, configured to perform uplink activation on the secondary cell for the UE according to the uplink activation signaling, so that the UE works in an uplink-activated and downlink-deactivated state of the secondary cell;
or
a downlink deactivation receiving module, configured to: when the UE works in an uplink-activated and downlink-activated state of a secondary cell, receive downlink deactivation signaling transmitted by the serving base station; and
a downlink deactivation module, configured to perform downlink deactivation on the secondary cell according to the downlink deactivation signaling, so that the UE works in an uplink-activated and downlink-deactivated state of the secondary cell;
or
a downlink deactivation module, configured to: when the UE works in an uplink-activated and downlink-activated state of a secondary cell, perform downlink deactivation on the secondary cell if the UE receives uplink grant signaling of the secondary cell and no downlink assignment signaling of the secondary cell within a specified time, so that the UE works in an uplink-activated and downlink-deactivated state of the secondary cell, where the uplink grant signaling is used to schedule transmission of uplink data in the secondary cell, and the downlink assignment signaling is used to schedule receiving of downlink data in the secondary cell, where
when the UE works in the uplink-activated and downlink-deactivated state of the secondary cell, an uplink signal that is to be transmitted by the UE by using the secondary cell to a base station to which the secondary cell belongs can be transmitted, and a downlink signal that is transmitted, to the UE by using the secondary cell, by the base station to which the secondary cell belongs can be received by the UE only in a subframe for transmitting a discovery reference signal DRS, where the uplink signal includes at least one of an uplink reference signal, uplink control signaling, or the uplink data, and the downlink signal includes at least one of a downlink reference signal, downlink control signaling, or the downlink data.

In a possible implementation manner of the present invention, the downlink deactivation module is configured to:

when the UE enters the uplink-activated and downlink-activated state of the secondary cell, start both a secondary cell deactivation timer_uplink and a secondary cell deactivation timer_downlink, where a numerical value on the secondary cell deactivation timer_uplink is a specified first initial value during start-up, and a numerical value on the secondary cell deactivation timer_downlink is a specified second initial value during start-up;
when the UE receives the uplink grant signaling in a subframe for receiving the downlink signal, reset the numerical value on the secondary cell deactivation timer_uplink to the first initial value; or

when the UE receives no downlink assignment signaling in the subframe for receiving the downlink signal, subtract 1 from the numerical value on the secondary cell deactivation timer_downlink; and
when the numerical value on the secondary cell deactivation timer_downlink is decreased to 0, perform downlink deactivation on the secondary cell.

In another possible implementation manner of the present invention, the apparatus further includes:

an uplink deactivation module, configured to: when the UE enters the uplink-activated and downlink-deactivated state of the secondary cell, start a secondary cell deactivation timer_uplink, where a numerical value on the secondary cell deactivation timer_uplink is a specified first initial value during start-up;
when the UE receives the uplink grant signaling in a subframe for receiving the downlink signal, reset the numerical value on the secondary cell deactivation timer_uplink to the first initial value; or
when the UE receives no uplink grant signaling in a subframe for receiving the downlink signal, subtract 1 from the numerical value on the secondary cell deactivation timer_uplink; and
when the numerical value on the secondary cell deactivation timer_uplink is decreased to 0, perform downlink deactivation on the secondary cell.

In still another possible implementation manner of the present invention, the apparatus further includes:

an uplink grant receiving module, configured to: when the UE works in the uplink-activated and downlink-deactivated state of the secondary cell, receive, in another cell except the secondary cell of a serving cell for the UE, uplink grant signaling transmitted by the serving base station, where the serving cell includes a primary cell and the secondary cell that are for the UE; or
when the UE works in the uplink-activated and downlink-deactivated state of the secondary cell, receive the uplink grant signaling in the subframe for transmitting the DRS in the secondary cell.

In yet another possible implementation manner of the present invention, the apparatus further includes:

a feedback receiving module, configured to: when the UE works in the uplink-activated and downlink-deactivated state of the secondary cell, receive, in the another cell except the secondary cell of the serving cell for the UE, feedback signaling transmitted by the serving base station, where the serving cell includes the primary cell and the secondary cell that are for the UE; or
when the UE works in the uplink-activated and downlink-deactivated state of the secondary cell, receive the feedback signaling in the subframe for transmitting the DRS in the secondary cell, where
the feedback signaling is used to feed back whether the base station to which the secondary cell belongs correctly receives the uplink data transmitted by the UE.

In still yet another possible implementation manner of the present invention, the apparatus further includes:

a transmit power obtaining module, configured to: when the UE works in the uplink-activated and downlink-deactivated state of the secondary cell, obtain a transmit power of the DRS;
a receive power measurement module, configured to: receive the DRS transmitted by the serving base station for the UE, and measure a receive power of the DRS;
a loss calculation module, configured to calculate, according to the transmit power of the DRS and the receive power of the DRS, a path loss for communication in the secondary cell; and
a power calculation module, configured to calculate, according to the path loss for communication in the secondary cell, a power for transmitting the uplink signal by the UE.

According to a fourth aspect, an embodiment of the present invention provides a radio resource management apparatus, where the apparatus includes:

a receiver, configured to: when user equipment UE works in an uplink-deactivated and downlink-deactivated state of a secondary cell, receive uplink activation signaling transmitted by a serving base station for the UE; and
a processor, configured to perform uplink activation on the secondary cell for the UE according to the uplink activation signaling, so that the UE works in an uplink-activated and downlink-deactivated state of the secondary cell; or
a receiver, configured to: when the UE works in an uplink-activated and downlink-activated state of a secondary cell, receive downlink deactivation signaling transmitted by the serving base station; and

a processor, configured to perform downlink deactivation on the secondary cell according to the downlink deactivation signaling, so that the UE works in an uplink-activated and downlink-deactivated state of the secondary cell; or

a processor, configured to: when the UE works in an uplink-activated and downlink-activated state of a secondary cell, perform downlink deactivation on the secondary cell if the UE receives uplink grant signaling of the secondary cell and no downlink assignment signaling of the secondary cell within a specified time, so that the UE works in an uplink-activated and downlink-deactivated state of the secondary cell, where the uplink grant signaling is used to schedule transmission of uplink data in the secondary cell, and the downlink assignment signaling is used to schedule receiving of downlink data in the secondary cell, where

when the UE works in the uplink-activated and downlink-deactivated state of the secondary cell, an uplink signal that is to be transmitted by the UE by using the secondary cell to a base station to which the secondary cell belongs can be transmitted, and a downlink signal that is transmitted, to the UE by using the secondary cell, by the base station to which the secondary cell belongs can be received by the UE only in a subframe for transmitting a discovery reference signal DRS, where the uplink signal includes at least one of an uplink reference signal, uplink control signaling, or the uplink data, and the downlink signal includes at least one of a downlink reference signal, downlink control signaling, or the downlink data.

In a possible implementation manner of the present invention, the processor is configured to:

when the UE enters the uplink-activated and downlink-activated state of the secondary cell, start both a secondary cell deactivation timer_uplink and a secondary cell deactivation timer_downlink, where a numerical value on the secondary cell deactivation timer_uplink is a specified first initial value during start-up, and a numerical value on the secondary cell deactivation timer_downlink is a specified second initial value during start-up;

when the UE receives the uplink grant signaling in a subframe for receiving the downlink signal, reset the numerical value on the secondary cell deactivation timer_uplink to the first initial value; or

when the UE receives no downlink assignment signaling in the subframe for receiving the downlink signal, subtract 1 from the numerical value on the secondary cell deactivation timer_downlink; and

when the numerical value on the secondary cell deactivation timer_downlink is decreased to 0, perform downlink deactivation on the secondary cell.

In another possible implementation manner of the present invention, the processor is further configured to:

when the UE enters the uplink-activated and downlink-deactivated state of the secondary cell, start a secondary cell deactivation timer_uplink, where a numerical value on the secondary cell deactivation timer_uplink is a specified first initial value during start-up;

when the UE receives the uplink grant signaling in a subframe for receiving the downlink signal, reset the numerical value on the secondary cell deactivation timer_uplink to the first initial value; or

when the UE receives no uplink grant signaling in a subframe for receiving the downlink signal, subtract 1 from the numerical value on the secondary cell deactivation timer_uplink; and

when the numerical value on the secondary cell deactivation timer_uplink is decreased to 0, perform downlink deactivation on the secondary cell.

In still another possible implementation manner of the present invention, the receiver is further configured to:

when the UE works in the uplink-activated and downlink-deactivated state of the secondary cell, receive, in another cell except the secondary cell of a serving cell for the UE, uplink grant signaling transmitted by the serving base station, where the serving cell includes a primary cell and the secondary cell that are for the UE; or

when the UE works in the uplink-activated and downlink-deactivated state of the secondary cell, receive the uplink grant signaling in the subframe for transmitting the DRS in the secondary cell.

In yet another possible implementation manner of the present invention, the receiver is further configured to:

when the UE works in the uplink-activated and downlink-deactivated state of the secondary cell, receive, in the another cell except the secondary cell of the serving cell for the UE, feedback signaling transmitted by the serving base station, where the serving cell includes the primary cell and the secondary cell that are for the UE; or

when the UE works in the uplink-activated and downlink-deactivated state of the secondary cell, receive the feedback signaling in the subframe for transmitting the DRS in the secondary cell, where

the feedback signaling is used to feed back whether the base station to which the secondary cell belongs correctly receives the uplink data transmitted by the UE.

In still yet another possible implementation manner of the present invention, the processor is further configured to: when the UE works in the uplink-activated and downlink-deactivated state of the secondary cell, obtain a transmit power of the DRS;

the receiver is further configured to receive the DRS transmitted by the serving base station for the UE; and

the processor is further configured to: measure a receive power of the DRS, and calculate, according to the transmit power of the DRS and the receive power of the DRS, a path loss for communication in the secondary cell; and calculate, according to the path loss for communication in the secondary cell, a power for transmitting the uplink signal by the UE.

According to a fifth aspect, an embodiment of the present invention provides a radio resource management system, where the system includes the radio resource management apparatus according to the first aspect and the radio resource management apparatus according to the third aspect.

According to a sixth aspect, an embodiment of the present invention provides a radio resource management method, where the method includes:

determining, by a serving base station for user equipment UE, that a state of a secondary cell for the UE needs to be changed to an uplink-enabled and downlink-disabled state; and

changing, by the serving base station, the state of the secondary cell, so that the state of the secondary cell is the uplink-enabled and downlink-disabled state, where

when the state of the secondary cell is the uplink-enabled and downlink-disabled state, an uplink signal that is transmitted by the UE by using the secondary cell to a base station to which the secondary cell belongs can be received by the base station to which the secondary cell belongs, and a downlink signal that is to be transmitted, to the UE by using the secondary cell, by the base station to which the secondary cell belongs can be transmitted only in a subframe for transmitting a discovery reference signal DRS, where the uplink signal includes at least one of an uplink reference signal, uplink control signaling, or uplink data, and the downlink signal includes at least one of a downlink reference signal, downlink control signaling, or downlink data.

In a possible implementation manner of the present invention, the determining, by a serving base station for user equipment UE, that a state of a secondary cell for the UE needs to be changed to an uplink-enabled and downlink-disabled state includes:

obtaining, by the serving base station for the UE, a current state of the secondary cell for the UE;

obtaining, by the serving base station, a network state of a serving cell for the UE, where the serving cell includes a primary cell and the secondary cell that are for the UE; and

determining, by the serving base station according to the current state of the secondary cell and the network state of the serving cell, that the state of the secondary cell needs to be changed to the uplink-enabled and downlink-disabled state.

Specifically, the network state of the serving cell includes one or more types of the following information:

whether currently there is uplink data and downlink data that are to be transmitted in the secondary cell;

volumes of uplink data and downlink data that are to be transmitted in the primary cell currently; or

uplink interference values and downlink interference values that are transmitted in the primary cell and the secondary cell currently.

Optionally, the determining, by the serving base station according to the current state of the secondary cell and the network state of the serving cell, that the state of the secondary cell needs to be changed to the uplink-enabled and downlink-disabled state includes:

when the current state of the secondary cell is an uplink-disabled and downlink-disabled state, an uplink-enabled and downlink-enabled state, or an uplink-disabled and downlink-enabled state and the network state of the serving cell meets any one of the following conditions, determining that the state of the secondary cell needs to be changed to the uplink-enabled and downlink-disabled state:

currently there is uplink data to be transmitted in the secondary cell and currently there is no downlink data to be transmitted in the secondary cell;

a volume of uplink data to be transmitted in the primary cell currently is greater than or equal to an uplink transmission threshold and a volume of downlink data to be transmitted in the primary cell currently is less than a downlink transmission threshold; or

an uplink interference value transmitted in the secondary cell currently is less than an uplink interference value transmitted in the primary cell currently, and a downlink interference value transmitted in the secondary cell currently is greater than or equal to a downlink interference value transmitted in the primary cell currently.

In another possible implementation manner of the present invention, the changing, by the serving base station, the state of the secondary cell, so that the state of the secondary cell is the uplink-enabled and downlink-disabled state, includes:

switching, by the serving base station, the state of the secondary cell to the uplink-enabled and downlink-disabled state if the serving base station and the base station to which the secondary cell belongs are a same base station; or transmitting, by the serving base station, a control instruction if the serving base station and the base station to which the secondary cell belongs are different base stations, where the control instruction is used to instruct the base station to which the secondary cell belongs to switch the state of the secondary cell to the uplink-enabled and downlink-disabled state.

In still another possible implementation manner of the present invention, the method further includes:

transmitting, by the serving base station, uplink activation signaling to the UE, where the uplink activation signaling is used to instruct the UE to perform uplink activation on the secondary cell.

In yet another possible implementation manner of the present invention, the method further includes:

transmitting, by the serving base station, downlink deactivation signaling to the UE, where the downlink deactivation signaling is used to instruct the UE to perform downlink deactivation on the secondary cell.

In still yet another possible implementation manner of the present invention, when the state of the secondary cell is the uplink-enabled and downlink-disabled state, the method further includes:

transmitting, by the serving base station and in another cell except the secondary cell of the serving cell for the UE, uplink grant signaling of the secondary cell to the UE, where the serving cell includes the primary cell and the secondary cell that are for the UE; or transmitting, by the serving base station, the uplink grant signaling to the UE in the subframe for transmitting the DRS in the secondary cell, where the uplink grant signaling is used to schedule transmission of the uplink data in the secondary cell.

In a further possible implementation manner of the present invention, when the state of the secondary cell is the uplink-enabled and downlink-disabled state, the method further includes:

transmitting, by the serving base station and in the another cell except the secondary cell of the serving cell, feedback signaling to the UE, where the serving cell includes the primary cell and the secondary cell that are for the UE; or transmitting, by the serving base station, the feedback signaling to the UE in the subframe for transmitting the DRS in the secondary cell, where the feedback signaling is used to feed back whether the base station to which the secondary cell belongs correctly receives the uplink data transmitted by the UE.

According to a seventh aspect, an embodiment of the present invention provides a radio resource management method, where the method includes:

receiving, by user equipment UE when the UE works in an uplink-deactivated and downlink-deactivated state of a secondary cell, uplink activation signaling transmitted by a serving base station for the UE; and performing, by the UE, uplink activation on the secondary cell for the UE according to the uplink activation signaling, so that the UE works in an uplink-activated and downlink-deactivated state of the secondary cell; or receiving, by the UE when the UE works in an uplink-activated and downlink-activated state of a secondary cell, downlink deactivation signaling transmitted by the serving base station; and performing, by the UE, downlink deactivation on the secondary cell according to the downlink deactivation signaling, so that the UE works in an uplink-activated and downlink-deactivated state of the secondary cell; or

performing, by the UE when the UE works in an uplink-activated and downlink-activated state of a secondary cell, downlink deactivation on the secondary cell if the UE receives uplink grant signaling of the secondary cell and no downlink assignment signaling of the secondary cell within a specified time, so that the UE works in an uplink-activated and downlink-deactivated state of the secondary cell, where the uplink grant signaling is used to schedule transmission of uplink data in the secondary cell, and the downlink assignment signaling is used to schedule receiving of downlink data in the secondary cell, where

when the UE works in the uplink-activated and downlink-deactivated state of the secondary cell, an uplink signal that is to be transmitted by the UE by using the secondary cell to a base station to which the secondary cell belongs can be transmitted, and a downlink signal that is transmitted, to the UE by using the secondary cell, by the base station to which the secondary cell belongs can be received by the UE only in a subframe for transmitting a discovery reference signal DRS, where the uplink signal includes at least one of an uplink reference signal, uplink control signaling, or the uplink data, and the downlink signal includes at least one of a downlink reference signal, downlink control signaling, or the downlink data.

In a possible implementation manner of the present invention, the performing, by the UE when the UE works in an uplink-activated and downlink-activated state of a secondary cell, downlink deactivation on the secondary cell if the UE receives uplink grant signaling of the secondary cell and no downlink assignment signaling of the secondary cell within a specified time includes:

when the UE enters the uplink-activated and downlink-activated state of the secondary cell, starting, by the UE, both a secondary cell deactivation timer_uplink and a secondary cell deactivation timer_downlink, where a numerical value on the secondary cell deactivation timer_uplink is a specified first initial value during start-up, and a numerical value on the secondary cell deactivation timer_downlink is a specified second initial value during start-up; when the UE receives the uplink grant signaling in a subframe for receiving the downlink signal, resetting, by the UE, the numerical value on the secondary cell deactivation timer_uplink to the first initial value; or when the UE receives no downlink assignment signaling in a subframe for receiving the downlink signal, subtracting, by the UE, 1 from the numerical value on the secondary cell deactivation timer_downlink; and when the numerical value on the secondary cell deactivation timer_downlink is decreased to 0, performing, by the UE, downlink deactivation on the secondary cell.

In another possible implementation manner of the present invention, when the UE enters the uplink-activated and downlink-deactivated state of the secondary cell, the method further includes:

starting, by the UE, a secondary cell deactivation timer_uplink, where a numerical value on the secondary cell deactivation timer_uplink is a specified first initial value during start-up; when the UE receives the uplink grant signaling in a subframe for receiving the downlink signal, resetting, by the UE, the numerical value on the secondary cell deactivation timer_uplink to the first initial value; or when the UE receives no uplink grant signaling in a subframe for receiving the downlink signal, subtracting, by the UE, 1 from the numerical value on the secondary cell deactivation timer_uplink; and when the numerical value on the secondary cell deactivation timer_uplink is decreased to 0, performing, by the UE, downlink deactivation on the secondary cell.

In still another possible implementation manner of the present invention, when the UE works in the uplink-activated and downlink-deactivated state of the secondary cell, the method further includes:

receiving, by the UE and in another cell except the secondary cell of a serving cell for the UE, uplink grant signaling transmitted by the serving base station, where the serving cell includes a primary cell and the secondary cell that are for the UE; or receiving, by the UE, the uplink grant signaling in the subframe for transmitting the DRS in the secondary cell.

In yet another possible implementation manner of the present invention, when the UE works in the uplink-activated and downlink-deactivated state of the secondary cell, the method further includes:

receiving, by the UE and in the another cell except the secondary cell of the serving cell for the UE, feedback signaling transmitted by the serving base station, where the serving cell includes the primary cell and the secondary cell that are for the UE; or receiving, by the UE, the feedback signaling in the subframe for transmitting the DRS in the secondary cell, where the feedback signaling is used to feed back whether the base station to which the secondary cell belongs correctly receives the uplink data transmitted by the UE.

In still yet another possible implementation manner of the present invention, when the UE works in the uplink-activated and downlink-deactivated state of the secondary cell, the method further includes:

obtaining, by the UE, a transmit power of the discovery reference signal DRS;
receiving, by the UE, the DRS transmitted by the serving base station for the UE, and measuring a receive power of the DRS;
calculating, by the UE according to the transmit power of the DRS and the receive power of the DRS, a path loss for communication in the secondary cell; and
calculating, by the UE according to the path loss for communication in the secondary cell, a power for transmitting the uplink signal by the UE.

Beneficial effects of the technical solutions provided by the embodiments of the present invention are as follows:

A state of a secondary cell is changed, so that the state of the secondary cell is an uplink-enabled and downlink-disabled state. When the state of the secondary cell is the uplink-enabled and downlink-disabled state, an uplink signal can be received in the secondary cell by a base station to which the secondary cell belongs, and a downlink signal can be transmitted in the secondary cell by the base station to which the secondary cell belongs only in a subframe for transmitting a discovery reference signal (Discovery Reference Signal, DRS for short). This prevents the base station to which the secondary cell belongs from still transmitting a cell-specific reference signal (Cell-specific Reference Signal, CRS for short), a physical control field indication channel (Physical Control Filed Indication Channel, PCFICH for short) signal, a physical broadcast channel (Physical Broadcast Channel, PBCH for short) signal, a synchronization channel (Synchronization Channel, SCH for short) signal, or the like to a UE at this moment, reduces power overheads of a base station, and relieves, when base stations are densely deployed, interference between cells configured for the base stations, thereby increasing a network throughput, and improving network performance.

BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show only some embodiments of the present invention, and a person of ordinary skill in the art may still derive other drawings from these accompanying drawings without creative efforts.

FIG. 1 is a schematic structural diagram of a radio resource management apparatus according to Embodiment 1 of the present invention;
FIG. 2 is a schematic structural diagram of a radio resource management apparatus according to Embodiment 2 of the present invention;
FIG. 3 is a schematic structural diagram of hardware of a radio resource management apparatus according to Embodiment 3 of the present invention;
FIG. 4 to FIG. 6 are schematic structural diagrams of a radio resource management apparatus according to Embodiment 4 of the present invention;
FIG. 7 to FIG. 9 are schematic structural diagrams of a radio resource management apparatus according to Embodiment 5 of the present invention;
FIG. 10 is a schematic structural diagram of hardware of a radio resource management apparatus according to Embodiment 6 of the present invention;
FIG. 11 is a schematic structural diagram of a radio resource management system according to Embodiment 7 of the present invention;
FIG. 12 and FIG. 13 are diagrams of application scenarios of a radio resource management method according to an embodiment of the present invention;
FIG. 14 is a flowchart of a radio resource management method according to Embodiment 8 of the present invention;
FIG. 15 to FIG. 17 are flowcharts of a radio resource management method according to Embodiment 9 of the present invention;
FIG. 18 is an interaction flowchart of a radio resource management method according to Embodiment 10 of the present invention; and
FIG. 19 is an interaction flowchart of a radio resource management method according to Embodiment 11 of the present invention.

**DESCRIPTION OF EMBODIMENTS**

To make the objectives, technical solutions, and advantages of the present invention clearer, the following further describes the embodiments of the present invention in detail with reference to the accompanying drawings.

**Embodiment 1**

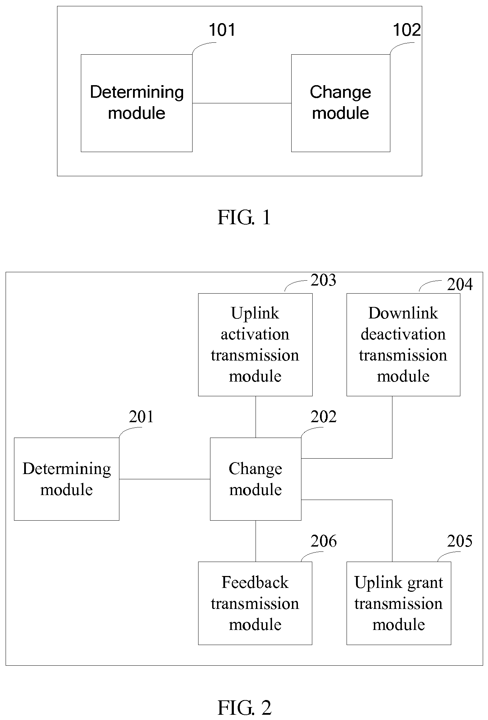

This embodiment of the present invention provides a radio resource management apparatus. The apparatus may be disposed on a serving base station for a UE. Referring to FIG. 1, the apparatus includes:

a determining module 101, configured to determine that a state of a secondary cell for the UE needs to be changed to an uplink-enabled and downlink-disabled state; and
a change module 102, configured to change the state of the secondary cell, so that the state of the secondary cell is the uplink-enabled and downlink-disabled state.

In this embodiment, when the state of the secondary cell is the uplink-enabled and downlink-disabled state, an uplink signal that is transmitted by the UE by using the secondary cell to a base station to which the secondary cell belongs can be received by the base station to which the secondary cell belongs, and a downlink signal that is to be transmitted, to the UE by using the secondary cell, by the base station to which the secondary cell belongs can be transmitted only in a subframe for transmitting a DRS. The uplink signal includes at least one of an uplink reference signal, uplink control signaling, or uplink data, and the downlink signal includes at least one of a downlink reference signal, downlink control signaling, or downlink data.

In this embodiment of the present invention, a state of a secondary cell is changed, so that the state of the secondary cell is an uplink-enabled and downlink-disabled state. When the state of the secondary cell is the uplink-enabled and downlink-disabled state, an uplink signal can be received in the secondary cell by a base station to which the secondary cell belongs, and a downlink signal can be transmitted in the secondary cell by the base station to which the secondary cell belongs only in a subframe for transmitting a DRS. This prevents the base station to which the secondary cell belongs from still transmitting a CRS, a PCFICH signal, a PBCH signal, an SCH signal, or the like in the secondary cell to a UE at this moment, reduces power overheads of a base station, and relieves, when base stations are densely deployed, interference between cells configured for the base stations, thereby increasing a network throughput, and improving network performance.

**Embodiment 2**

This embodiment of the present invention provides a radio resource management apparatus. The apparatus may be disposed on a serving base station for a UE. Referring to FIG. 2, the apparatus includes:

a determining module 201, configured to determine that a state of a secondary cell for the UE needs to be changed to an uplink-enabled and downlink-disabled state; and
a change module 202, configured to change the state of the secondary cell, so that the state of the secondary cell is the uplink-enabled and downlink-disabled state.

In this embodiment, when the state of the secondary cell is the uplink-enabled and downlink-disabled state, an uplink signal that is transmitted by the UE by using the secondary cell to a base station to which the secondary cell belongs can be received by the base station to which the secondary cell belongs, and a downlink signal that is to be transmitted, to the UE by using the secondary cell, by the base station to which the secondary cell belongs can be transmitted only in a subframe for transmitting a DRS., The uplink signal includes at least one of an uplink reference signal, uplink control signaling, or uplink data, and the downlink signal includes at least one of a downlink reference signal, downlink control signaling, or downlink data.

In an implementation manner of this embodiment, the determining module 201 may include:

a current-state obtaining unit, configured to obtain a current state of the secondary cell for the UE;
a network state obtaining unit, configured to obtain a network state of a serving cell for the UE, where the serving cell includes a primary cell and the secondary cell that are for the UE; and
a determining unit, configured to determine, according to the current state of the secondary cell and the network state of the serving cell, that the state of the secondary cell needs to be changed to the uplink-enabled and downlink-disabled state.

Specifically, the network state of the serving cell may include one or more types of the following information:

whether currently there is uplink data and downlink data that are to be transmitted in the secondary cell;
volumes of uplink data and downlink data that are to be transmitted in the primary cell currently; or
uplink interference values and downlink interference values that are transmitted in the primary cell and the secondary cell currently.

Optionally, the determining unit may be configured to:

when the current state of the secondary cell is an uplink-disabled and downlink-disabled state, an uplink-enabled and downlink-enabled state, or an uplink-disabled and downlink-enabled state and the network state of the serving cell meets any one of the following conditions, determine that the state of the secondary cell needs to be changed to the uplink-enabled and downlink-disabled state:

currently there is uplink data to be transmitted in the secondary cell and currently there is no downlink data to be transmitted in the secondary cell;
a volume of uplink data to be transmitted in the primary cell currently is greater than or equal to an uplink transmission threshold and a volume of downlink data to be transmitted in the primary cell currently is less than a downlink transmission threshold; or
an uplink interference value transmitted in the secondary cell currently is less than an uplink interference value transmitted in the primary cell currently, and a downlink interference value transmitted in the secondary cell currently is greater than or equal to a downlink interference value transmitted in the primary cell currently.

In another implementation manner of this embodiment, the change module 202 may be configured to:

switch the state of the secondary cell to the uplink-enabled and downlink-disabled state if the serving base station for the UE and the base station to which the secondary cell belongs are a same base station; or
transmit a control instruction if the serving base station for the UE and the base station to which the secondary cell belongs are different base stations, where the control instruction is used to instruct the base station to which the secondary cell belongs to switch the state of the secondary cell to the uplink-enabled and downlink-disabled state.

In still another implementation manner of this embodiment, the apparatus may further include:

an uplink activation transmission module 203, configured to transmit uplink activation signaling to the UE, where the uplink activation signaling is used to instruct the UE to perform uplink activation on the secondary cell.

In yet another implementation manner of this embodiment, the apparatus may further include:

a downlink deactivation transmission module 204, configured to transmit downlink deactivation signaling to the UE, where the downlink deactivation signaling is used to instruct the UE to perform downlink deactivation on the secondary cell.

In still yet another implementation manner of this embodiment, the apparatus may further include:

an uplink grant transmission module 205, configured to: when the state of the secondary cell is the uplink-enabled and downlink-disabled state, transmit, in another cell except the secondary cell of the serving cell for the UE, uplink grant signaling of the secondary cell to the UE, where the serving cell includes the primary cell and the secondary cell that are for the UE; or
when the state of the secondary cell is the uplink-enabled and downlink-disabled state, transmit uplink grant signaling to the UE in the subframe for transmitting the DRS in the secondary cell.

The uplink grant signaling is used to schedule transmission of the uplink data in the secondary cell.
In a further implementation manner of this embodiment, the apparatus may further include:

a feedback transmission module 206, configured to: when the state of the secondary cell is the uplink-enabled and downlink-disabled state, transmit, in the another cell except the secondary cell of the serving cell, feedback signaling to the UE, where the serving cell includes the primary cell and the secondary cell that are for the UE; or
when the state of the secondary cell is the uplink-enabled and downlink-disabled state, transmit feedback signaling to the UE in the subframe for transmitting the DRS in the secondary cell.

The feedback signaling is used to feed back whether the base station to which the secondary cell belongs correctly receives the uplink data transmitted by the UE.

In this embodiment of the present invention, a state of a secondary cell is changed, so that the state of the secondary cell is an uplink-enabled and downlink-disabled state. When the state of the secondary cell is the uplink-enabled and downlink-disabled state, an uplink signal can be received in the secondary cell by a base station to which the secondary cell belongs, and a downlink signal can be transmitted in the secondary cell by the base station to which the secondary cell belongs only in a subframe for transmitting a DRS. This prevents the base station to which the secondary cell belongs from still transmitting a CRS, a PCFICH signal, a PBCH signal, an SCH signal, or the like in the secondary cell to a UE at this moment, reduces power overheads of a base station, and relieves, when base stations are densely deployed, interference between cells configured for the base stations, thereby increasing a network throughput, and improving network performance.

**Embodiment 3**

This embodiment of the present invention provides a radio resource management apparatus. The apparatus may be disposed on a serving base station for a UE, and the apparatus includes a transmitter 31, a receiver 32, and at least one processor 34 (for example, a CPU).

It is easily known that the apparatus 30 may further include components such as a memory 33 and a communications bus 35.

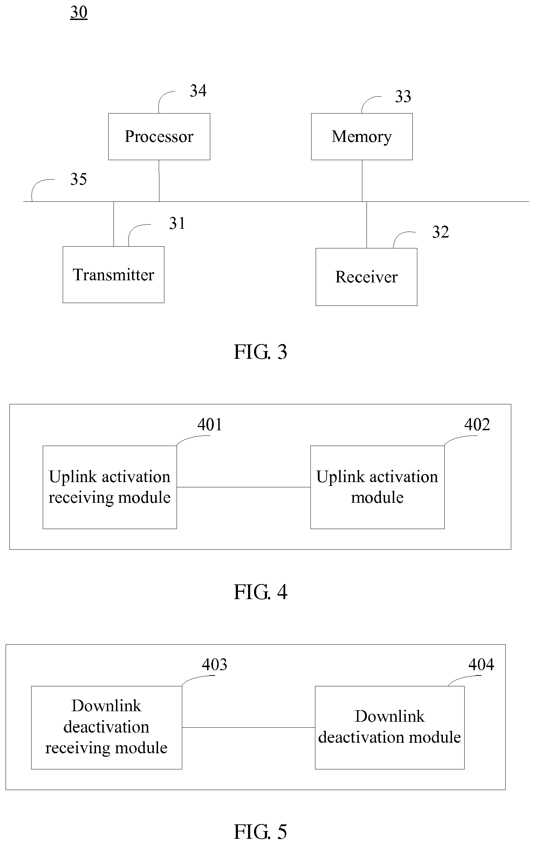

The following describes each component of the apparatus 30 in detail with reference to FIG. 3.

The communications bus 35 is configured to implement a connection and communication between the processor 34, the memory 33, the transmitter 31, and the receiver 32.

The memory 33 may be configured to store software programs and application modules. By running or executing the software programs and/or application modules stored in the memory 33 and calling data stored in the memory 33, the processor 34 can determine that a state of a secondary cell for the UE needs to be changed to an uplink-enabled and downlink-disabled state, and change the state of the secondary cell, so that the state of the secondary cell is the uplink-enabled and downlink-disabled state.

In this embodiment, when the state of the secondary cell is the uplink-enabled and downlink-disabled state, an uplink signal that is transmitted by the UE by using the secondary cell to a base station to which the secondary cell belongs can be received by the base station to which the secondary cell belongs, and a downlink signal that is to be transmitted, to the UE by using the secondary cell, by the base station to which the secondary cell belongs can be transmitted only in a subframe for transmitting a DRS. The uplink signal includes at least one of an uplink reference signal, uplink control signaling, or uplink data, and the downlink signal includes at least one of a downlink reference signal, downlink control signaling, or downlink data.

In an implementation manner of this embodiment, the determining, by the processor 34, that a state of a secondary cell for the UE needs to be changed to an uplink-enabled and downlink-disabled state may include:

obtaining a current state of the secondary cell for the UE;
obtaining a network state of a serving cell for the UE, where the serving cell includes a primary cell and the secondary cell that are for the UE; and
determining, according to the current state of the secondary cell and the network state of the serving cell, that the state of the secondary cell needs to be changed to the uplink-enabled and downlink-disabled state.

Specifically, the network state of the serving cell may include one or more types of the following information:

whether currently there is uplink data and downlink data that are to be transmitted in the secondary cell;
volumes of uplink data and downlink data that are to be transmitted in the primary cell currently; or
uplink interference values and downlink interference values that are transmitted in the primary cell and the secondary cell currently.

Optionally, the determining, by the processor 34 according to the current state of the secondary cell and the network state of the serving cell, that the state of the secondary cell needs to be changed to the uplink-enabled and downlink-disabled state may include:

when the current state of the secondary cell is an uplink-disabled and downlink-disabled state, an uplink-enabled and downlink-enabled state, or an uplink-disabled and downlink-enabled state and the network state of the serving cell meets any one of the following conditions, determine that the state of the secondary cell needs to be changed to the uplink-enabled and downlink-disabled state:

currently there is uplink data to be transmitted in the secondary cell and currently there is no downlink data to be transmitted in the secondary cell;

a volume of uplink data to be transmitted in the primary cell currently is greater than or equal to an uplink transmission threshold and a volume of downlink data to be transmitted in the primary cell currently is less than a downlink transmission threshold; or

an uplink interference value transmitted in the secondary cell currently is less than an uplink interference value transmitted in the primary cell currently, and a downlink interference value transmitted in the secondary cell currently is greater than or equal to a downlink interference value transmitted in the primary cell currently.

In another implementation manner of this embodiment, the changing, by the processor 34, the state of the secondary cell, so that the state of the secondary cell is the uplink-enabled and downlink-disabled state, may include:

switching the state of the secondary cell to the uplink-enabled and downlink-disabled state if the serving base station for the UE and the base station to which the secondary cell belongs are a same base station; or

transmitting a control instruction if the serving base station for the UE and the base station to which the secondary cell belongs are different base stations, where the control instruction is used to instruct the base station to which the secondary cell belongs to switch the state of the secondary cell to the uplink-enabled and downlink-disabled state.

In still another implementation manner of this embodiment, the transmitter 31 may be configured to:

transmit uplink activation signaling to the UE, where the uplink activation signaling is used to instruct the UE to perform uplink activation on the secondary cell.

In yet another implementation manner of this embodiment, the transmitter 31 may be configured to:

transmit downlink deactivation signaling to the UE, where the downlink deactivation signaling is used to instruct the UE to perform downlink deactivation on the secondary cell.

In still yet another implementation manner of this embodiment, the transmitter 31 may be configured to:

when the state of the secondary cell is the uplink-enabled and downlink-disabled state, transmit, in another cell except the secondary cell of the serving cell for the UE, uplink grant signaling of the secondary cell to the UE, where the serving cell includes the primary cell and the secondary cell that are for the UE; or

when the state of the secondary cell is the uplink-enabled and downlink-disabled state, transmit uplink grant signaling to the UE in the subframe for transmitting the DRS in the secondary cell.

The uplink grant signaling is used to schedule transmission of the uplink data in the secondary cell.

In a further implementation manner of this embodiment, the transmitter 31 may be configured to:

when the state of the secondary cell is the uplink-enabled and downlink-disabled state, transmit, in the another cell except the secondary cell of the serving cell, feedback signaling to the UE, where the serving cell includes the primary cell and the secondary cell that are for the UE; or

when the state of the secondary cell is the uplink-enabled and downlink-disabled state, transmit feedback signaling to the UE in the subframe for transmitting the DRS in the secondary cell.

The feedback signaling is used to feed back whether the base station to which the secondary cell belongs correctly receives the uplink data transmitted by the UE.

In this embodiment of the present invention, a state of a secondary cell is changed, so that the state of the secondary cell is an uplink-enabled and downlink-disabled state. When the state of the secondary cell is the uplink-enabled and downlink-disabled state, an uplink signal can be received in the secondary cell by a base station to which the secondary cell belongs, and a downlink signal can be transmitted in the secondary cell by the base station to which the secondary cell belongs only in a subframe for transmitting a DRS. This prevents the base station to which the secondary cell belongs from still transmitting a CRS, a PCFICH signal, a PBCH signal, an SCH signal, or the like in the secondary cell to a UE at this moment, reduces power overheads of a base station, and relieves, when base stations are densely deployed, interference between cells configured for the base stations, thereby increasing a network throughput, and improving network performance.

### Embodiment 4

This embodiment of the present invention provides a radio resource management apparatus. The apparatus may be disposed on a UE. The apparatus may be implemented by using the following three structures.

A first structure includes an uplink activation receiving module 401 and an uplink activation module 402. Referring to FIG. 4, a specific structure is as follows.

The uplink activation receiving module 401 is configured to: when the UE works in an uplink-deactivated and downlink-deactivated state of a secondary cell, receive uplink activation signaling transmitted by a serving base station for the UE.

The uplink activation module 402 is configured to perform uplink activation on the secondary cell for the UE according to the uplink activation signaling, so that the UE works in an uplink-activated and downlink-deactivated state of the secondary cell.

A second structure includes a downlink deactivation receiving module 403 and a downlink deactivation module 404. Referring to FIG. 5, a specific structure is as follows:

The downlink deactivation receiving module 403 is configured to: when the UE works in an uplink-activated and downlink-activated state of a secondary cell, receive downlink deactivation signaling transmitted by a serving base station for the UE.

The downlink deactivation module 404 is configured to perform downlink deactivation on the secondary cell according to the downlink deactivation signaling, so that the UE works in an uplink-activated and downlink-deactivated state of the secondary cell.

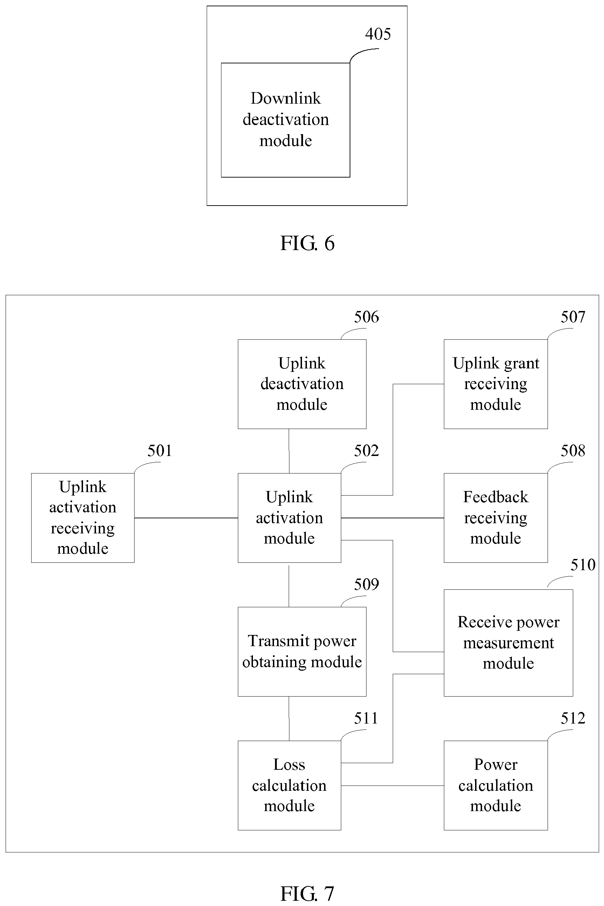

A third structure includes a downlink deactivation module 405. Referring to FIG. 6, a specific structure is as follows.

The downlink deactivation module 405 is configured to: when the UE works in an uplink-activated and downlink-activated state of a secondary cell, perform downlink deactivation on the secondary cell if the UE receives uplink grant signaling of the secondary cell and no downlink assignment signaling of the secondary cell within a specified time, so that the UE works in an uplink-activated and downlink-deactivated state of the secondary cell, where the uplink grant signaling is used to schedule transmission of uplink data in the secondary cell, and the downlink assignment signaling is used to schedule receiving of downlink data in the secondary cell.

In this embodiment, when the UE works in the uplink-activated and downlink-deactivated state of the secondary cell, an uplink signal that is to be transmitted by the UE by using the secondary cell to a base station to which the secondary cell belongs can be transmitted, and a downlink signal that is transmitted, to the UE by using the secondary cell, by the base station to which the secondary cell belongs can be received by the UE only in a subframe for transmitting a DRS. The uplink signal includes at least one of an uplink reference signal, uplink control signaling, or the uplink data, and the downlink signal includes at least one of a downlink reference signal, downlink control signaling, or the downlink data.

In this embodiment of the present invention, uplink activation or downlink deactivation is performed on a secondary cell for a UE, so that the UE works in an uplink-activated and downlink-deactivated state of the secondary cell. When the UE works in the uplink-activated and downlink-deactivated state of the secondary cell, an uplink signal can be transmitted in the secondary cell by the UE, and a downlink signal can be received in the secondary cell by the UE only in a subframe for transmitting a DRS. This prevents a base station to which the secondary cell belongs from still transmitting a CRS, a PCFICH signal, a PBCH signal, an SCH signal, or the like in the secondary cell to the UE at this moment, reduces power overheads of a base station, and relieves, when base stations are densely deployed, interference between cells configured for the base stations, thereby increasing a network throughput, and improving network performance.

### Embodiment 5

This embodiment of the present invention provides a radio resource management apparatus. The apparatus may be disposed on a UE. The apparatus may be implemented by using the following three structures.

A first structure includes an uplink activation receiving module 501 and an uplink activation module 502. Referring to FIG. 7, a specific structure is as follows.

The uplink activation receiving module 501 is configured to: when the UE works in an uplink-deactivated and downlink-deactivated state of a secondary cell, receive uplink activation signaling transmitted by a serving base station for the UE.

The uplink activation module 502 is configured to perform uplink activation on the secondary cell for the UE according to the uplink activation signaling, so that the UE works in an uplink-activated and downlink-deactivated state of the secondary cell.

In this embodiment, when the UE works in the uplink-activated and downlink-deactivated state of the secondary cell, an uplink signal that is to be transmitted by the UE by using the secondary cell to a base station to which the secondary cell belongs can be transmitted, and a downlink signal that is transmitted, to the UE by using the secondary cell, by the base station to which the secondary cell belongs can be received by the UE only in a subframe for transmitting a DRS. The uplink signal includes at least one of an uplink reference signal, uplink control signaling, or uplink data, and the downlink signal includes at least one of a downlink reference signal, downlink control signaling, or downlink data.

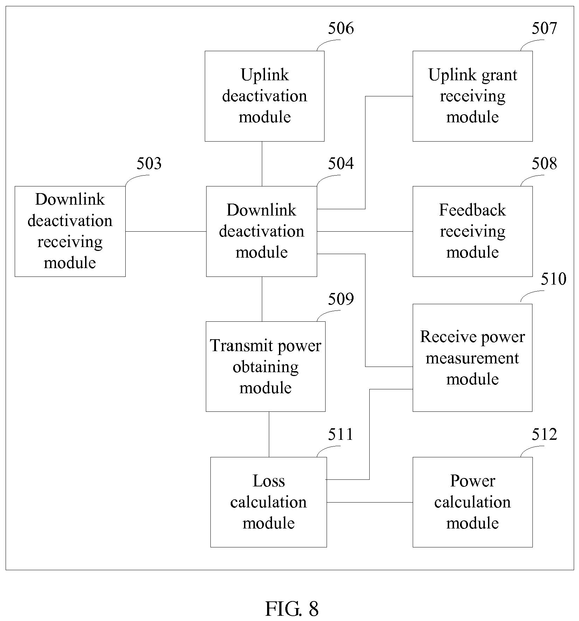

A second structure includes a downlink deactivation receiving module 503 and a downlink deactivation module 504. Referring to FIG. 8, a specific structure is as follows.

The downlink deactivation receiving module 503 is configured to: when the UE works in an uplink-activated and downlink-activated state of a secondary cell, receive downlink deactivation signaling transmitted by a serving base station for the UE.

The downlink deactivation module 504 is configured to perform downlink deactivation on the secondary cell according to the downlink deactivation signaling, so that the UE works in an uplink-activated and downlink-deactivated state of the secondary cell.

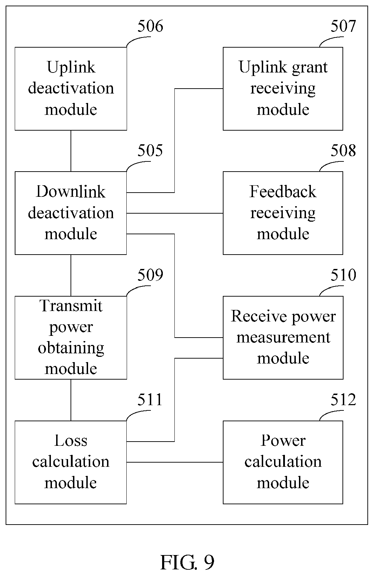

A third structure includes a downlink deactivation module 505. Referring to FIG. 9, a specific structure is as follows.

The downlink deactivation module 505 is configured to: when the UE works in an uplink-activated and downlink-activated state of a secondary cell, perform downlink deactivation on the secondary cell if the UE receives uplink grant signaling of the secondary cell and no downlink assignment signaling of the secondary cell within a specified time, so that the UE works in an uplink-activated and downlink-deactivated state of the secondary cell, where the uplink grant signaling is used to schedule transmission of uplink data in the secondary cell, and the downlink assignment signaling is used to schedule receiving of downlink data in the secondary cell.

Optionally, the downlink deactivation module 505 may be configured to:

when the UE enters the uplink-activated and downlink-activated state of the secondary cell, start both a secondary cell deactivation timer_uplink and a secondary cell deactivation timer_downlink, where a numerical value on the secondary cell deactivation timer_uplink is a specified first initial value during start-up, and a numerical value on the secondary cell deactivation timer_downlink is a specified second initial value during start-up;

when the UE receives the uplink grant signaling in a subframe for receiving the downlink signal, reset the numerical value on the secondary cell deactivation timer_uplink to the first initial value;

when the UE receives no downlink assignment signaling in the subframe for receiving the downlink signal, subtract 1 from the numerical value on the secondary cell deactivation timer_downlink; and

when the numerical value on the secondary cell deactivation timer_downlink is decreased to 0, perform downlink deactivation on the secondary cell.

In an implementation manner of this embodiment, referring to FIG. 7 to FIG. 9, the apparatus may further include:

an uplink deactivation module 506, configured to: when the UE enters the uplink-activated and downlink-deactivated state of the secondary cell, start a secondary cell deactivation timer_uplink, where a numerical value on the secondary cell deactivation timer_uplink is a specified first initial value during start-up;

when the UE receives the uplink grant signaling in a subframe for receiving the downlink signal, reset the numerical value on the secondary cell deactivation timer_uplink to the first initial value; or

when the UE receives no uplink grant signaling in a subframe for receiving the downlink signal, subtract 1 from the numerical value on the secondary cell deactivation timer_uplink; and

when the numerical value on the secondary cell deactivation timer_uplink is decreased to 0, perform downlink deactivation on the secondary cell.

In another implementation manner of this embodiment, referring to FIG. 7 to FIG. 9, the apparatus may further include:

an uplink grant receiving module 507, configured to: when the UE works in the uplink-activated and downlink-deactivated state of the secondary cell, receive, in another cell except the secondary cell of a serving cell for the UE, uplink grant signaling transmitted by the serving base station, where the serving cell includes a primary cell and the secondary cell that are for the UE; or

when the UE works in the uplink-activated and downlink-deactivated state of the secondary cell, receive uplink grant signaling in the subframe for transmitting the DRS in the secondary cell.

In still another implementation manner of this embodiment, referring to FIG. 7 to FIG. 9, the apparatus may further include:

a feedback receiving module 508, configured to: when the UE works in the uplink-activated and downlink-deactivated state of the secondary cell, receive, in the another cell except the secondary cell of the serving cell for the UE, feedback signaling transmitted by the serving base station, where the serving cell includes the primary cell and the secondary cell that are for the UE; or
when the UE works in the uplink-activated and downlink-deactivated state of the secondary cell, receive feedback signaling in the subframe for transmitting the DRS in the secondary cell.

The feedback signaling is used to feed back whether the base station to which the secondary cell belongs correctly receives the uplink data transmitted by the UE.

In yet another implementation manner of this embodiment, referring to FIG. 7 to FIG. 9, the apparatus may further include:

a transmit power obtaining module 509, configured to: when the UE works in the uplink-activated and downlink-deactivated state of the secondary cell, obtain a transmit power of the DRS;
a receive power measurement module 510, configured to: receive the DRS transmitted by the serving base station for the UE, and measure a receive power of the DRS;
a loss calculation module 511, configured to calculate, according to the transmit power of the DRS and the receive power of the DRS, a path loss for communication in the secondary cell; and
a power calculation module 512, configured to calculate, according to the path loss for communication in the secondary cell, a power for transmitting the uplink signal by the UE.

In this embodiment of the present invention, uplink activation or downlink deactivation is performed on a secondary cell for a UE, so that the UE works in an uplink-activated and downlink-deactivated state of the secondary cell. When the UE works in the uplink-activated and downlink-deactivated state of the secondary cell, an uplink signal can be transmitted in the secondary cell by the UE, and a downlink signal can be received in the secondary cell by the UE only in a subframe for transmitting a DRS. This prevents a base station to which the secondary cell belongs from still transmitting a CRS, a PCFICH signal, a PBCH signal, an SCH signal, or the like in the secondary cell to the UE at this moment, reduces power overheads of a base station, and relieves, when base stations are densely deployed, interference between cells configured for the base stations, thereby increasing a network throughput, and improving network performance.

## Embodiment 6

This embodiment of the present invention provides a radio resource management apparatus. The apparatus may be disposed on a UE, and the apparatus includes a transmitter 61, a receiver 62, and at least one processor 64 (for example, a CPU).

It is easily known that the apparatus 60 may further include components such as a memory 63 and a communications bus 65.

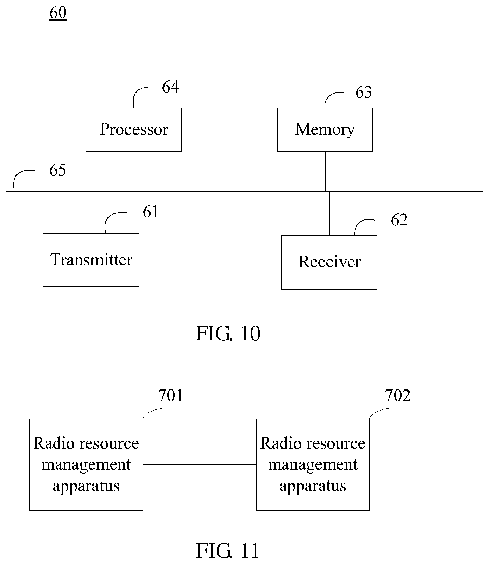

The following describes each component of the apparatus 60 in detail with reference to FIG. 10.

The communications bus 65 is configured to implement a connection and communication between the processor 64, the memory 63, the transmitter 61, and the receiver 62.

The memory 63 may be configured to store software programs and application modules.

In a first implementation manner, the receiver 62 is configured to: when the UE works in an uplink-deactivated and downlink-deactivated state of a secondary cell, receive uplink activation signaling transmitted by a serving base station for the UE.

Specifically, by running or executing the software programs and/or application modules stored in the memory 63 and calling data stored in the memory 63, the processor 64 may perform uplink activation on the secondary cell for the UE according to the uplink activation signaling, so that the UE works in an uplink-activated and downlink-deactivated state of the secondary cell.

In this embodiment, when the UE works in the uplink-activated and downlink-deactivated state of the secondary cell, an uplink signal that is to be transmitted by the UE by using the secondary cell to a base station to which the secondary cell belongs can be transmitted, and a downlink signal that is transmitted, to the UE by using the secondary cell, by the base station to which the secondary cell belongs can be received by the UE only in a subframe for transmitting a DRS. The uplink signal includes at least one of an uplink reference signal, uplink control signaling, or uplink data, and the downlink signal includes at least one of a downlink reference signal, downlink control signaling, or downlink data.

In a second implementation manner, the receiver 62 is configured to: when the UE works in an uplink-activated and downlink-activated state of a secondary cell, receive downlink deactivation signaling transmitted by a serving base station for the UE.

Specifically, by running or executing the software programs and/or application modules stored in the memory 63 and calling data stored in the memory 63, the processor 64 may perform downlink deactivation on the secondary cell according to the downlink deactivation signaling, so that the UE works in an uplink-activated and downlink-deactivated state of the secondary cell.

In the second implementation manner, by running or executing the software programs and/or application modules stored in the memory 63 and calling data stored in the memory 63, the processor 64 may perform, when the UE works in an uplink-activated and downlink-activated state of a secondary cell, downlink deactivation on the secondary cell if the UE receives uplink grant signaling of the secondary cell and no downlink assignment signaling of the secondary cell within a specified time, so that the UE works in an uplink-activated and downlink-deactivated state of the secondary cell, where the uplink grant signaling is used to schedule transmission of uplink data in the secondary cell, and the downlink assignment signaling is used to schedule receiving of downlink data in the secondary cell.

Preferably, the performing, by the processor 64, when the UE works in an uplink-activated and downlink-activated state of a secondary cell, downlink deactivation on the secondary cell if the UE receives uplink grant signaling of the secondary cell and no downlink assignment signaling of the secondary cell within a specified time, so that the UE works in an uplink-activated and downlink-deactivated state of the secondary cell, may include:

when the UE enters the uplink-activated and downlink-activated state of the secondary cell, starting both a secondary cell deactivation timer_uplink and a secondary cell deactivation timer_downlink, where a numerical value on the secondary cell deactivation timer_uplink is a specified first initial value during start-up, and a numerical value on the secondary cell deactivation timer_downlink is a specified second initial value during start-up;
when the UE receives the uplink grant signaling in a subframe for receiving the downlink signal, resetting the numerical value on the secondary cell deactivation timer_uplink to the first initial value;
when the UE receives no downlink assignment signaling in the subframe for receiving the downlink signal, subtracting 1 from the numerical value on the secondary cell deactivation timer_downlink; and
when the numerical value on the secondary cell deactivation timer_downlink is decreased to 0, performing downlink deactivation on the secondary cell.

In an implementation manner of this embodiment, the processor 64 may be further configured to:

when the UE enters the uplink-activated and downlink-deactivated state of the secondary cell, start a secondary cell deactivation timer_uplink, where a numerical value on the secondary cell deactivation timer_uplink is a specified first initial value during start-up;
when the UE receives the uplink grant signaling in a subframe for receiving the downlink signal, reset the numerical value on the secondary cell deactivation timer_uplink to the first initial value; or
when the UE receives no uplink grant signaling in a subframe for receiving the downlink signal, subtract 1 from the numerical value on the secondary cell deactivation timer_uplink; and
when the numerical value on the secondary cell deactivation timer_uplink is decreased to 0, perform downlink deactivation on the secondary cell.

In another implementation manner of this embodiment, the receiver 62 may be further configured to:

when the UE works in the uplink-activated and downlink-deactivated state of the secondary cell, receive, in another cell except the secondary cell of the serving cell for the UE, uplink grant signaling transmitted by the serving base station, where the serving cell includes a primary cell and the secondary cell that are for the UE; or
when the UE works in the uplink-activated and downlink-deactivated state of the secondary cell, receive uplink grant signaling in the subframe for transmitting the DRS in the secondary cell.

In still another implementation manner of this embodiment, the receiver 62 may be further configured to:

when the UE works in the uplink-activated and downlink-deactivated state of the secondary cell, receive, in the another cell except the secondary cell of the serving cell for the UE, feedback signaling transmitted by the serving base station, where the serving cell includes the primary cell and the secondary cell that are for the UE; or
when the UE works in the uplink-activated and downlink-deactivated state of the secondary cell, receive feedback signaling in the subframe for transmitting the DRS in the secondary cell.

The feedback signaling is used to feed back whether the base station to which the secondary cell belongs correctly receives the uplink data transmitted by the UE.

In yet another implementation manner of this embodiment, the processor 64 may be further configured to: when the UE works in the uplink-activated and downlink-deactivated state of the secondary cell, obtain a transmit power of the DRS.

The receiver 62 may be further configured to: receive the DRS transmitted by the serving base station for the UE, and measure a receive power of the DRS.

The processor 64 may be further configured to: calculate, according to the transmit power of the DRS and the receive power of the DRS, a path loss for communication in the secondary cell; and calculate, according to the path loss for communication in the secondary cell, a power for transmitting the uplink signal by the UE.

In this embodiment of the present invention, uplink activation or downlink deactivation is performed on a secondary cell for a UE, so that the UE works in an uplink-activated and downlink-deactivated state of the secondary cell. When the UE works in the uplink-activated and downlink-deactivated state of the secondary cell, an uplink signal can be transmitted in the secondary cell by the UE, and a downlink signal can be received in the secondary cell by the UE only in a subframe for transmitting a DRS. This prevents a base station to which the secondary cell belongs from still transmitting a CRS, a PCFICH signal, a PBCH signal, an SCH signal, or the like in the secondary cell to the UE at this moment, reduces power overheads of a base station, and relieves, when base stations are densely deployed, interference between cells configured for the base stations, thereby increasing a network throughput, and improving network performance.

**Embodiment 7**

This embodiment of the present invention provides a radio resource management system. Referring to FIG. 11, the system includes the radio resource management apparatus 701 provided by Embodiment 1 or Embodiment 2 and the radio resource management apparatus 702 provided by Embodiment 3 or Embodiment 4.

In this embodiment of the present invention, a state of a secondary cell is changed, so that the state of the secondary cell is an uplink-enabled and downlink-disabled state. When the state of the secondary cell is the uplink-enabled and downlink-disabled state, an uplink signal can be received in the secondary cell by a base station to which the secondary cell belongs, and a downlink signal can be transmitted in the secondary cell by the base station to which the secondary cell belongs only in a subframe for transmitting a DRS. This prevents the base station to which the secondary cell belongs from still transmitting a CRS, a PCFICH signal, a PBCH signal, an SCH signal, or the like in the secondary cell to a UE at this moment, reduces power overheads of a base station, and relieves, when base stations are densely deployed, interference between cells configured for the base stations, thereby increasing a network throughput, and improving network performance.

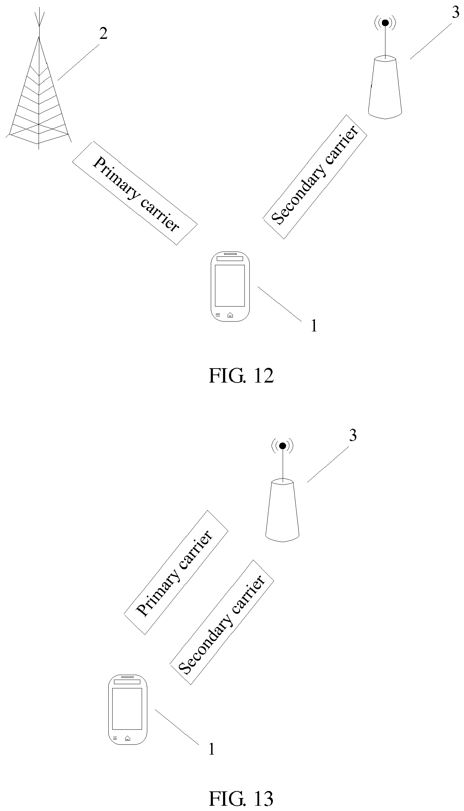

The following first briefly describes, with reference to FIG. 12 and FIG. 13, an application scenario of a radio resource management method provided by the present invention.

In a CA technology, a UE can perform communication on multiple carriers simultaneously. The multiple carriers include a primary component carrier and a secondary component carrier. A cell that works in the primary component carrier is a primary cell. A cell that works in the secondary component carrier is a secondary cell. A base station to which the primary cell belongs and a base station to which the secondary cell belongs may be a same base station, or may be different base stations.

For example, referring to FIG. 12, a UE 1 communicates with a first base station 2 on a primary component carrier (for example, 800 MHz), a serving cell of the first base station 2 is a primary cell, and the primary cell retains an enabled state all the time. The UE 1 communicates with a second base station 3 on a secondary component carrier (for example, 900 MHz), and a serving cell of the second base station 3 is a secondary cell. The base station to which the secondary cell belongs may enable or disable a carrier for the secondary cell according to a network data volume and an interference status. For example, when data is being transmitted within the secondary cell, or an increase of a volume of transmitted data results in channel congestion of the primary cell, the base station to which the secondary cell belongs may enable the carrier for the secondary cell. For another example, when no data is being transmitted within the secondary cell, a volume of transmitted data is relatively small and can be handled by the primary cell, or a level of interference on a network is relatively high, the base station to which the secondary cell belongs may disable the carrier for the secondary cell.

For another example, referring to FIG. 13, data is transmitted between the UE 1 and the second base station 3 on both a primary component carrier and a secondary component carrier. In a serving cell of the second base station 3, a cell that works on the primary component carrier is a primary cell, and a cell that works on the secondary component carrier is a secondary cell. Similarly, a base station to which the secondary cell belongs may enable or disable a carrier for the secondary cell according to a network data volume and an interference status.

Both the base station 2 and the base station 3 may be macro base stations, or may be micro base stations; or one of the base station 2 and the base station 3 may be a macro base station, and the other may be a micro base station, which is not limited in the present invention. The macro base station is a base station with a large transmit power and a high erecting height. The macro base station has a wide coverage area. Each macro base station generally serves a relatively large quantity of UEs, and a rate of data transmission between each UE and a corresponding macro base station is relatively low. The micro base station is a base station with a small transmit power and a low erecting height (generally mounted on a public facility such as a telegraph pole). Micro base stations may be deployed densely. Each micro base station serves a relatively small quantity of UEs. A rate of data transmission between each UE and a corresponding micro base station is relatively high.

When the base station to which the primary cell belongs and the base station to which the secondary cell belongs are different base stations, a backhaul link is used to connect the base station to which the primary cell belongs and the base station to which the secondary cell belongs, where the backhaul link may be fiber, cable, or microwave transmission. The backhaul link is used to perform quick communication between the base station to which the primary cell belongs and the base station to which the secondary cell belongs, so that the base station to which the primary cell belongs can assist the base station to which the secondary cell belongs in communicating with the UE.

The application scenario of the radio resource management method described above is only an example, on which no limitation is imposed in the present invention.

**Embodiment 8**

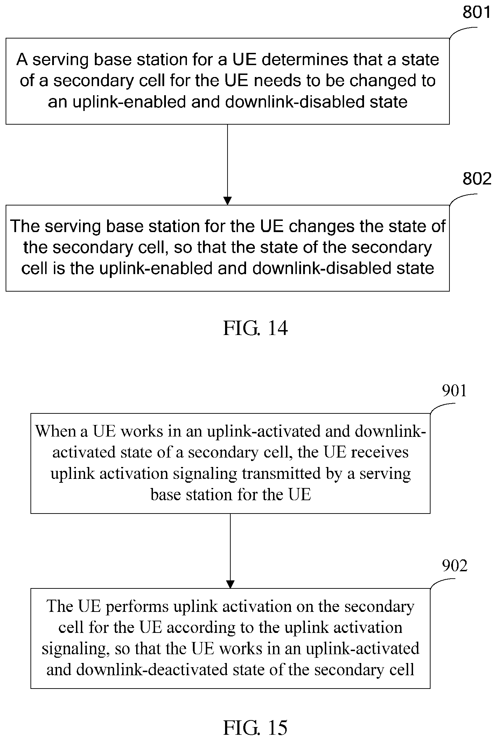

This embodiment of the present invention provides a radio resource management method. The method may be executed by a base station. Referring to FIG. 14, the method includes the following steps.

Step 801: A serving base station for a UE determines that a state of a secondary cell for the UE needs to be changed to an uplink-enabled and downlink-disabled state.

Step 802: The serving base station for the UE changes the state of the secondary cell, so that the state of the secondary cell is the uplink-enabled and downlink-disabled state.

In this embodiment, an uplink is a direction from the UE to the serving base station for the UE, and a downlink is a direction from the serving base station for the UE to the UE. When the state of the secondary cell is the uplink-enabled and downlink-disabled state, an uplink signal that is transmitted by the UE by using the secondary cell to a base station to which the secondary cell belongs can be received by the base station to which the secondary cell belongs, and a downlink signal that is to be transmitted, to the UE by using the secondary cell, by the base station to which the secondary cell belongs can be transmitted only in a subframe for transmitting a DRS. The uplink signal includes at least one of an uplink reference signal, uplink control signaling, or uplink data. The downlink signal includes at least one of a downlink reference signal, downlink control signaling, or downlink data.

In specific implementation, when a CA technology is used, the UE first accesses a primary cell. A base station to which the primary cell belongs configures the secondary cell for the UE by transmitting configuration information to the UE, so that the UE learns that the secondary cell can be used for communication. Further, after the UE receives activation signaling for the secondary cell transmitted by the base station to which the primary cell belongs and the UE activates the secondary cell according to the activation signaling for the secondary cell, the UE uses the secondary cell to perform communication. This is the prior art, and no details are described herein. The base station to which the primary cell belongs may be the same as a base station to which the secondary cell belongs (for example, in a scenario shown in FIG. 13), or may be different from a base station to which the secondary cell belongs (for example, in a scenario shown in FIG. 12).

The serving base station for the UE may also change the state of the secondary cell, so that the state of the secondary cell is an uplink-enabled and downlink-enabled state. When the state of the secondary cell is the uplink-enabled and downlink-enabled state, the uplink signal that is transmitted by the UE by using the secondary cell to the base station to which the secondary cell belongs can be received by the base station to which the secondary cell belongs, and the downlink signal that is to be transmitted, to the UE by using the secondary cell, by the base station to which the secondary cell belongs can be transmitted.

The serving base station for the UE may further change the state of the secondary cell, so that the state of the secondary cell is an uplink-disabled and downlink-enabled state. When the state of the secondary cell is the uplink-disabled and downlink-enabled state, the uplink signal that is transmitted by the UE by using the secondary cell to the base station to which the secondary cell belongs cannot be received by the base station to which the secondary cell belongs, and the downlink signal that is to be transmitted, to the UE by using the secondary cell, by the base station to which the secondary cell belongs can be transmitted.

The serving base station for the UE may further change the state of the secondary cell, so that the state of the secondary cell is an uplink-disabled and downlink-disabled state. When the state of the secondary cell is the uplink-disabled and downlink-disabled state, the uplink signal that is transmitted by the UE by using the secondary cell to the base station to which the secondary cell belongs cannot be received by the base station to which the secondary cell belongs, and the downlink signal that is to be transmitted, to the UE by using the secondary cell, by the base station to which the secondary cell belongs can be transmitted only in the subframe for transmitting the DRS.

In this embodiment of the present invention, a state of a secondary cell is changed, so that the state of the secondary cell is an uplink-enabled and downlink-disabled state. When the state of the secondary cell is the uplink-enabled and downlink-disabled state, an uplink signal can be received in the secondary cell by a base station to which the secondary cell belongs, and a downlink signal can be transmitted in the secondary cell by the base station to which the secondary cell belongs only in a subframe for transmitting a DRS. This prevents the base station to which the secondary cell belongs from still transmitting a CRS, a PCFICH signal, a PBCH signal, an SCH signal, or the like in the secondary cell to a UE at this moment, reduces power overheads of a base station, and relieves, when base stations are densely deployed, interference between cells configured for the base stations, thereby increasing a network throughput, and improving network performance.

**Embodiment 9**

This embodiment of the present invention provides a radio resource management method. The method may be executed by a UE. The method may be implemented in the following three manners.

A first manner includes step 901 and step 902. Referring to FIG. 15, specific steps are as follows:

Step 901: When the UE works in an uplink-activated and downlink-activated state of a secondary cell, the UE receives uplink activation signaling transmitted by a serving base station for the UE.

Step 902: The UE performs uplink activation on the secondary cell for the UE according to the uplink activation signaling, so that the UE works in an uplink-activated and downlink-deactivated state of the secondary cell.

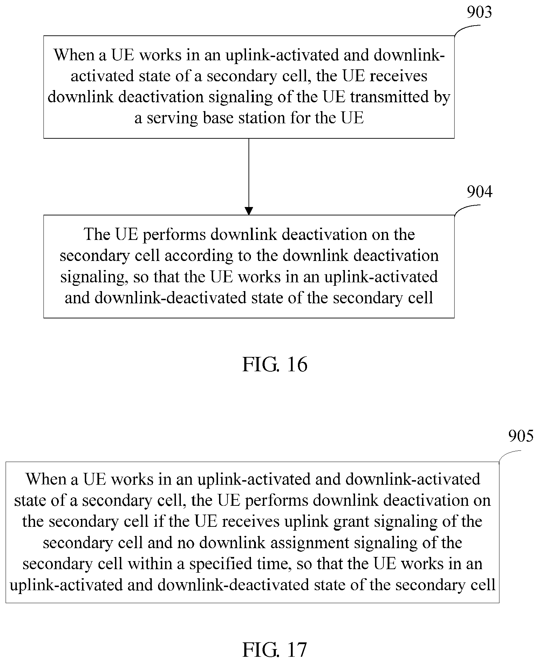

A second manner includes step 903 and step 904. Referring to FIG. 16, specific steps are as follows:

Step 903: When the UE works in an uplink-activated and downlink-activated state of a secondary cell, the UE receives downlink deactivation signaling of the UE transmitted by a serving base station for the UE.

Step 904: The UE performs downlink deactivation on the secondary cell according to the downlink deactivation signaling, so that the UE works in an uplink-activated and downlink-deactivated state of the secondary cell.

A third manner includes step 905. Referring to FIG. 17, a specific step is as follows:

Step 905: When the UE works in an uplink-activated and downlink-activated state of a secondary cell, the UE performs downlink deactivation on the secondary cell if the UE receives uplink grant signaling of the secondary cell and no downlink assignment signaling of the secondary cell within a specified time, so that the UE works in an uplink-activated and downlink-deactivated state of the secondary cell.

In this embodiment, the uplink grant signaling of the secondary cell is used to schedule transmission of uplink data in the secondary cell, and the downlink assignment signaling of the secondary cell is used to schedule receiving of downlink data in the secondary cell. When the UE works in the uplink-activated and downlink-deactivated state of the secondary cell, an uplink signal that is to be transmitted by the UE by using the secondary cell to a base station to which the secondary cell belongs can be transmitted, and a downlink signal that is transmitted, to the UE by using the secondary cell, by the base station to which the secondary cell belongs can be received by the UE only in a subframe for transmitting a DRS. The uplink signal includes at least one of an uplink reference signal, uplink control signaling, or the uplink data, and the downlink signal includes at least one of a downlink reference signal, downlink control signaling, or the downlink data.

The UE may alternatively work in the uplink-activated and downlink-activated state of the secondary cell. When the UE works in the uplink-activated and downlink-activated state of the secondary cell, the uplink signal that is to be transmitted by the UE by using the secondary cell to the base station to which the secondary cell belongs can be transmitted, and the downlink signal that is transmitted, to the UE by using the secondary cell, by the base station to which the secondary cell belongs can be received by the UE.

The UE may alternatively work in an uplink-deactivated and downlink-activated state of the secondary cell. When the UE works in the uplink-deactivated and downlink-activated state of the secondary cell, the uplink signal that is to be transmitted by the UE by using the secondary cell to the base station to which the secondary cell belongs cannot be transmitted, and the downlink signal that is transmitted, to the UE by using the secondary cell, by the base station to which the secondary cell belongs can be received by the UE.

The UE may alternatively work in an uplink-deactivated and downlink-deactivated state of the secondary cell. When the UE works in the uplink-deactivated and downlink-deactivated state of the secondary cell, the uplink signal that is to be transmitted by the UE by using the secondary cell to the base station to which the secondary cell belongs cannot be transmitted, and the downlink signal that is transmitted, to the UE by using the secondary cell, by the base station to which the secondary cell belongs can be received by the UE only in the subframe for transmitting the DRS.

In this embodiment of the present invention, uplink activation or downlink deactivation is performed on a secondary cell for a UE, so that the UE works in an uplink-activated and downlink-deactivated state of the secondary cell. When the UE works in the uplink-activated and downlink-deactivated state of the secondary cell, an uplink signal can be transmitted in the secondary cell by the UE, and a downlink signal can be received in the secondary cell by the UE only in a subframe for transmitting a DRS. This prevents a base station to which the secondary cell belongs from still transmitting a CRS, a PCFICH signal, a PBCH signal, an SCH signal, or the like in the secondary cell to the UE at this moment, reduces power overheads of a base station, and relieves, when base stations are densely deployed, interference between cells configured for the base stations, thereby increasing a network throughput, and improving network performance.

**Embodiment 10**

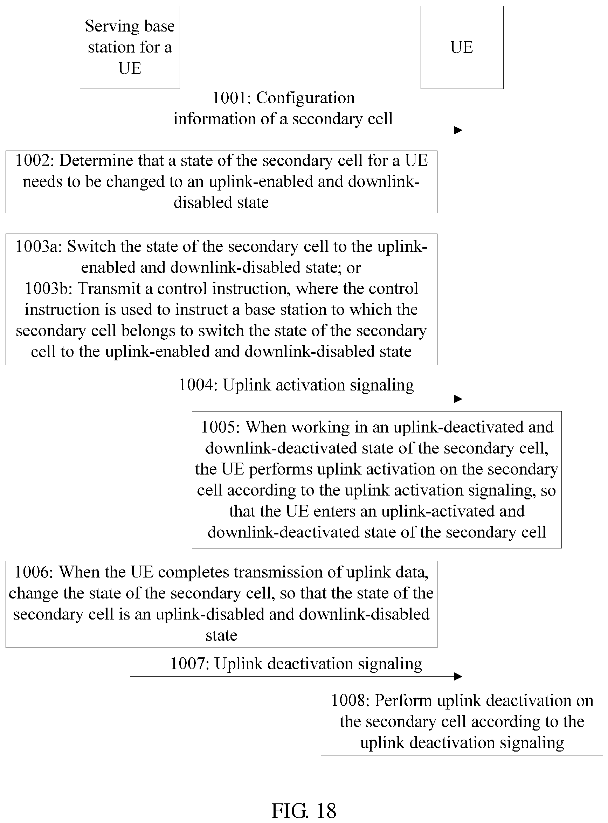

This embodiment of the present invention provides a radio resource management method. In this embodiment, an initial state of a secondary cell is an uplink-disabled and downlink-disabled state, that is, an uplink signal cannot be received in the secondary cell by a base station to which the secondary cell belongs, and a downlink signal can be transmitted in the secondary cell by the base station to which the secondary cell belongs only in a subframe for transmitting a DRS. Referring to FIG. 18, the method includes the following steps.

Step 1001: A serving base station for a UE transmits configuration information of the secondary cell to the UE. When a CA technology is used, the UE first accesses a primary cell. A base station to which the primary cell belongs configures the secondary cell for the UE by transmitting the configuration information to the UE, so that the UE learns that the secondary cell can be used for communication. Further, after the UE receives activation signaling for the secondary cell transmitted by the base station to which the primary cell belongs and the UE activates the secondary cell according to the activation signaling for the secondary cell, the UE uses the secondary cell to perform communication. This is the prior art, and no details are described herein. The base station to which the primary cell belongs may be the same as a base station to which the secondary cell belongs (for example, in a scenario shown in FIG. 13), or may be different from a base station to which the secondary cell belongs (for example, in a scenario shown in FIG. 12).

It should be noted that the serving base station for the UE in step 1001 is the base station to which the primary cell belongs.

Step 1002: The serving base station for the UE determines that a state of the secondary cell for the UE needs to be changed to an uplink-enabled and downlink-disabled state.

In an implementation manner of this embodiment, step 1002 may include:

obtaining, by the serving base station for the UE, a current state of the secondary cell;
obtaining, by the serving base station for the UE, a network state of a serving cell for the UE, where the serving cell includes the primary cell and the secondary cell that are for the UE; and
determining, by the serving base station for the UE according to the current state of the secondary cell and the network state of the serving cell, that the state of the secondary cell needs to be changed to the uplink-enabled and downlink-disabled state.

Specifically, the network state of the serving cell may include one or more types of the following information:

whether currently there is uplink data and downlink data that are to be transmitted in the secondary cell;
volumes of uplink data and downlink data that are to be transmitted in the primary cell currently; or
uplink interference values and downlink interference values that are transmitted in the primary cell and the secondary cell currently.

An uplink is a direction from the UE to the serving base station for the UE. A downlink is a direction from the serving base station for the UE to the UE.

In specific implementation, the serving base station for the UE may determine, according to whether an uplink grant request transmitted by the UE is received, whether there is uplink data to be transmitted in the secondary cell currently; determine, according to a data buffering status of the base station to which the secondary cell belongs, whether there is downlink data to be transmitted in the secondary cell currently; determine, according to a data buffering status reported by the UE, a volume of uplink data to be transmitted in the primary cell currently; determine, according to a data buffering status of the base station to which the primary cell belongs, a volume of downlink data to be transmitted in the primary cell currently; determine, according to an interference status measured and reported by the UE, uplink interference values transmitted in the primary cell and the secondary cell currently; and determine, by means of direct measurement and by receiving measurement results from another base station, downlink interference values transmitted in the primary cell and the secondary cell currently.

For example, when whether there is uplink data to be transmitted in the secondary cell currently is being determined, an uplink grant request is first transmitted to the serving base station (which may be the base station to which the primary cell belongs, or may be the base station to which the secondary cell belongs) of the UE when the UE needs to transmit uplink data. In addition, because a backhaul link is used for a connection between base stations, messages can be exchanged quickly. Therefore, regardless of whether the serving base station for the UE and the base station to which the secondary cell belongs are a same base station, the serving base station for the UE can determine, according to whether the uplink grant request transmitted by the UE is received, whether there is the uplink data to be transmitted in the secondary cell currently.

For another example, when the base station to which the primary cell belongs and the base station to which the secondary cell belongs are different base stations, if the serving base station for the UE is the base station to which the primary cell belongs, the serving base station for the UE may obtain, by using a backhaul link, a data buffering status of the base station to which the secondary cell belongs and further determine whether there is downlink data to be transmitted in the secondary cell currently; if the serving base station for the UE is the base station to which the secondary cell belongs, the serving base station for the UE may obtain, by using a backhaul link, a data buffering status of the base station to which the primary cell belongs and further determine a volume of downlink data to be transmitted in the primary cell currently.

For still another example, when uplink interference values transmitted in the secondary cell currently are being determined, the UE separately measures receive powers for receiving downlink reference signals in the primary cell and the secondary cell, obtains, from the downlink reference signals, transmit powers of the downlink reference signals, determines, by calculating differences between the receive powers of the downlink reference signals and the transmit powers of the downlink reference signals, the uplink interference values transmitted in the primary cell and the secondary cell currently and report the uplink interference values to the serving base station for the UE, so that the serving base station for the UE further determines the uplink interference values transmitted in the primary cell and the secondary cell currently.

Similarly, when determining downlink interference values transmitted in the secondary cell currently, the serving base station for the UE measures receive powers of uplink reference signals transmitted by the UE, obtains, from the uplink reference signals, transmit powers of the uplink reference signals, calculates differences between the receive powers of the uplink reference signals and the transmit powers of the uplink reference signals, obtains, by using a backhaul link when the serving base station for the UE is not the base station to which the primary cell belongs and/or the base station to which the secondary cell belongs, measurement results from the base station to which the primary cell belongs and/or the base station to which the secondary cell belongs, and determines the downlink interference values transmitted in the primary cell and the secondary cell currently.

It can be understood that in step 1002, the serving base station for the UE may be the base station to which the primary cell belongs, or may be the base station to which the secondary cell belongs.

Optionally, the determining, by the serving base station for the UE according to the current state of the secondary cell and the network state of the serving cell, that the state of the secondary cell needs to be changed to the uplink-enabled and downlink-disabled state may include:

when the current state of the secondary cell is an uplink-disabled and downlink-disabled state, an uplink-enabled and downlink-enabled state, or an uplink-disabled and downlink-enabled state and the network state of the serving cell meets any one of the following conditions, determine that the state of the secondary cell needs to be changed to the uplink-enabled and downlink-disabled state:

currently there is uplink data to be transmitted in the secondary cell and currently there is no downlink data to be transmitted in the secondary cell;
a volume of uplink data to be transmitted in the primary cell currently is greater than or equal to an uplink transmission threshold and a volume of downlink data to be transmitted in the primary cell currently is less than a downlink transmission threshold; or
an uplink interference value transmitted in the secondary cell currently is less than an uplink interference value transmitted in the primary cell currently, and a downlink interference value transmitted in the secondary cell currently is greater than or equal to a downlink interference value transmitted in the primary cell currently.

When the state of the secondary cell is the uplink-enabled and downlink-disabled state, an uplink signal that is transmitted by the UE by using the secondary cell to the base station to which the secondary cell belongs can be received by the base station to which the secondary cell belongs, and a downlink signal that is to be transmitted, to the UE by using the secondary cell, by the base station to which the secondary cell belongs can be transmitted only in a subframe for transmitting a DRS. The uplink signal includes at least one of an uplink reference signal, uplink control signaling, or uplink data. The downlink signal includes at least one of a downlink reference signal, downlink control signaling, or downlink data.

The uplink reference signal is used to detect quality of an uplink channel. The uplink control signaling is signaling that is used to control data transmission and that is transmitted by the UE to the base station to which the secondary cell belongs. The uplink data is data transmitted by the UE to the base station to which the secondary cell belongs, for example, a picture uploaded to a network by a user. The downlink reference signal is used to detect quality of a downlink channel. The downlink control signaling is signaling that is used to control data transmission and that is transmitted to the UE by the base station to which the secondary cell belongs. The downlink data is data that is transmitted to the UE by the base station to which the secondary cell belongs, for example, a webpage browsed by a user.

Specifically, when the state of the secondary cell is the uplink-disabled and downlink-disabled state, step 1003a is performed if the serving base station for the UE and the base station to which the secondary cell belongs are a same base station; or step 1003b is performed if the serving base station for the UE and the base station to which the secondary cell belongs are different base stations.

Step 1003a: The serving base station for the UE switches the state of the secondary cell to the uplink-enabled and downlink-disabled state.

In specific implementation, a register (buffer) in which the state of the secondary cell is set is disposed in the base station to which the secondary cell belongs. A value in the register represents the state of the secondary cell. For example, when the value in the register is 01, the state of the secondary cell is the uplink-enabled and downlink-disabled state. Because the serving base station for the UE and the base station to which the secondary cell belongs are the same base station, the serving base station for the UE can directly change the value in the register, so as to change the state of the secondary cell to the uplink-enabled and downlink-disabled state.

It should be noted that in step 1003a, when the serving base station for the UE and the base station to which the secondary cell belongs are the same base station, the serving base station for the UE may be the base station to which the primary cell belongs, or may be not the base station to which the primary cell belongs. When the serving base station for the UE is the base station to which the primary cell belongs, the base station to which the primary cell belongs and the base station to which the secondary cell belongs are the same base station. When the serving base station for the UE is not the base station to which the primary cell belongs, the base station to which the primary cell belongs and the base station to which the secondary cell belongs are different base stations.

Step 1003b: The serving base station for the UE transmits a control instruction, where the control instruction is used to instruct a base station to which the secondary cell belongs to switch the state of the secondary cell to the uplink-enabled and downlink-disabled state.

It can be understood that in step 1003b, the serving base station for the UE may be the base station to which the primary cell belongs, or may be a base station to which a secondary cell, other than the secondary cell whose state is switched, of the serving cell for the UE belongs.

It can be understood that the serving base station may change the state of the secondary cell by performing step 1003a or step 1003b, so that the state of the secondary cell is the uplink-enabled and downlink-disabled state.

Step 1004: The serving base station for the UE transmits uplink activation signaling to the UE, where the uplink activation signaling is used to instruct the UE to perform uplink activation on the secondary cell. Step 1004 is an optional step, and may be performed after step 1003a, or may be performed after step 1003b.

In specific implementation, after the state of the secondary cell is the uplink-enabled and downlink-disabled state (step 1003a) when the base station to which the primary cell belongs is the same as the base station to which the secondary cell belongs, the base station to which the primary cell belongs (that is, the base station to which the secondary cell belongs) can directly transmit the uplink activation signaling for the secondary cell to the UE. After the state of the secondary cell is the uplink-enabled and downlink-disabled state (step 1003b) when the base station to which the primary cell belongs is different from the base station to which the secondary cell belongs, the base station to which the secondary cell belongs first transmits, by using the backhaul link, the uplink activation signaling for the secondary cell to the base station to which the primary cell belongs, and then the base station to which the primary cell belongs transmits the uplink activation signaling for the secondary cell to the UE.

Step 1005: When the UE works in an uplink-deactivated and downlink-deactivated state of the secondary cell, the UE performs uplink activation on the secondary cell according to the uplink activation signaling, so that the UE enters an uplink-activated and downlink-deactivated state of the secondary cell.

It can be understood that if the UE receives the uplink activation signaling and downlink activation signaling, the UE performs both uplink activation and downlink activation on the secondary cell; in this case, the UE specifically performs the following operations:

(1) transmitting a sounding reference signal (Sounding Reference Signal, SRS for short) to the base station to which the secondary cell belongs, where the SRS is a type of an uplink reference signal;
(2) measuring downlink channel quality of the secondary cell, and reporting a measurement result to the base station to which the secondary cell belongs;
(3) detecting a physical downlink control channel (Physical Downlink Control Channel, PDCCH for short) corresponding to the secondary cell, where the PDCCH is used to transmit downlink control signaling, both uplink grant (uplink grant) signaling and downlink assignment signaling (Downlink assignment) are transmitted by using the PDCCH, either of the uplink grant signaling and the downlink assignment signaling is a type of downlink control signaling, the uplink grant signaling is used to schedule transmission of the uplink data in the secondary cell, and the downlink assignment signaling is used to schedule transmission of the downlink data in the secondary cell; and
(4) starting or restarting a secondary cell deactivation timer (Secondary Cell Deactivation Timer).

Specifically, the serving base station for the UE configures, for the UE, parameter information for SRS transmission. When the secondary cell for the UE is deactivated, the UE stops SRS transmission. However, once the secondary cell is activated, SRS transmission is performed again according to the previous parameter information configured for SRS.

This is the prior art, and no details are described herein.

Compared with that both uplink activation and downlink activation are performed on the secondary cell in the prior art, in the present invention, after only uplink activation is performed on a secondary cell, the UE does not measure downlink channel quality of the secondary cell, and does not report a measurement result to the base station to which the secondary cell belongs. The measurement result includes a channel quality indicator (Channel Quality Indicator, CQI for short), a pre-coding matrix indicator (Pre-coding Matrix Indicator, PMI for short), a rank indicator (Rank Indicator, RI for short), and a pre-coding type indicator (Pre-coding Type Indicator, PTI for short).

In an implementation manner of this embodiment, when the UE enters the uplink-activated and downlink-deactivated state of the secondary cell, the method may further include:

starting, by the UE, a secondary cell deactivation timer_uplink, where a numerical value on the secondary cell deactivation timer_uplink is a specified first initial value during start-up;
when the UE receives the uplink grant signaling of the secondary cell in a subframe for receiving the downlink signal, resetting, by the UE, the numerical value on the secondary cell deactivation timer_uplink to the first initial value; or when the UE receives no uplink grant signaling of the secondary cell in a subframe for receiving the downlink signal, subtracting, by the UE, 1 from the numerical value on the secondary cell deactivation timer_uplink; and
when the numerical value on the secondary cell deactivation timer_uplink is decreased to 0, performing, by the UE, downlink deactivation on the secondary cell.

In an actual application, two secondary cell deactivation timers (Secondary Cell Deactivation Timer) are disposed in the UE: a secondary cell deactivation timer_uplink (Secondary Cell Deactivation Timer_uplink) and a secondary cell deactivation timer_downlink (Secondary Cell Deactivation Timer_downlink) respectively. The secondary cell deactivation timer_uplink and the secondary cell deactivation timer_downlink may be existing counters (that is, secondary cell deactivation timers), or may be counters newly introduced. The first initial value is preset for the UE by a network, for example, 640 subframes (subframe).

Alternatively, in another embodiment, both uplink activation and downlink activation may be first performed on the secondary cell. When the UE performs both uplink activation and downlink activation on the secondary cell, the UE starts both a secondary cell deactivation timer_uplink and a secondary cell deactivation timer_downlink, where a numerical value on the secondary cell deactivation timer_uplink is a specified first initial value during start-up, and a numerical value on the secondary cell deactivation timer_downlink is a specified second initial value during start-up;

when the UE receives the uplink grant signaling of the secondary cell in a subframe for receiving the downlink signal, the UE resets the numerical value on the secondary cell deactivation timer_uplink to the first initial value; or when the UE receives no downlink assignment signaling of the secondary cell in a subframe for receiving the downlink signal, the UE subtracts 1 from the numerical value on the secondary cell deactivation timer_downlink; and when the numerical value on the secondary cell deactivation timer_downlink is decreased to 0, the UE performs downlink deactivation on the secondary cell, so that the UE enters the uplink-activated and downlink-deactivated state of the secondary cell.

Certainly, when the UE receives the downlink assignment signaling of the secondary cell in a subframe for receiving the downlink signal, the UE alternatively resets the numerical value on the secondary cell deactivation timer_downlink to a second initial value; or when the UE receives no uplink grant signaling of the secondary cell in a subframe for receiving the downlink signal, the UE also subtracts 1 from the numerical value on the secondary cell deactivation timer_uplink; and when the numerical value on the secondary cell deactivation timer_uplink is decreased to 0, the UE performs uplink deactivation on the secondary cell.

In another implementation manner of this embodiment, when the UE works in the uplink-activated and downlink-deactivated state of the secondary cell (in this case, the state of the secondary cell is the uplink-enabled and downlink-disabled state), the method may further include:

transmitting, by the serving base station for the UE and in another cell except the secondary cell of the serving cell for the UE, uplink grant signaling of the secondary cell to the UE, where the serving cell includes a primary cell and the secondary cell;

or

transmitting, by the serving base station for the UE, uplink grant signaling of the secondary cell to the UE in a subframe for transmitting a DRS in the secondary cell.

Specifically, the another cell except the secondary cell of the serving cell for the UE may be the primary cell, or may be another secondary cell than the secondary cell.

According to the existing LTE protocol, before the UE transmits the uplink data to the base station to which the secondary cell belongs, the base station to which the secondary cell belongs needs to transmit the uplink grant signaling to the UE first, where the uplink grant signaling usually carries tens of bits (bit) of information, so that the UE learns an uplink data transmission time (a time-frequency location for uplink data transmission, for example, the fourth subframe after the uplink grant signaling is received, that is, after 4 ms), a format (an uplink data modulation and coding scheme, and the like), and the like, to control and assist the uplink data transmission. That the UE receives the uplink grant signaling means that the UE gains a right to transmit the uplink data.

In this embodiment, the uplink grant signaling is transmitted by using the PDCCH corresponding to the secondary cell. In another embodiment, the uplink grant signaling may also be transmitted by using an enhanced physical downlink control channel (Enhanced Physical Downlink Control Channel, EPDCCH) channel in addition to being transmitted by using the PDCCH channel. This is the prior art, and no details are described herein.

If the base station to which the primary cell belongs is different from the base station to which the secondary cell belongs, the transmitting, by the serving base station for the UE and in another cell except the secondary cell of the serving cell for the UE, uplink grant signaling of the secondary cell to the UE may include: transmitting, by the base station to which the secondary cell belongs and by using a backhaul link, the uplink grant signaling of the secondary cell to the base station to which the primary cell belongs; and transmitting, by the base station to which the primary cell belongs, the uplink grant signaling of the secondary cell to the UE.

Regardless of whether the base station to which the primary cell belongs is the same as the base station to which the secondary cell belongs, the uplink grant signaling of the secondary cell can be transmitted to the UE in the subframe for transmitting the DRS in the secondary cell. The DRS is a signal that is periodically transmitted by the base station, to which the secondary cell belongs, when the state of the secondary cell is a downlink-disabled state (including the uplink-disabled and downlink-disabled state and the uplink-enabled and downlink-disabled state). A major objective of transmitting the DRS is to ensure that the UE can discover existence of the secondary cell. Generally, a DRS transmission period is set to be relatively long, for example, being transmitted once per tens or hundreds of milliseconds (ms). A relatively long DRS transmission period can reduce power consumption of the secondary cell, and can reduce interference of the secondary cell to a neighboring cell.

It can be understood that when the state of the secondary cell is the uplink-enabled and downlink-enabled state, the base station to which the secondary cell belongs directly transmits the uplink grant signaling of the secondary cell to the UE.

In still another implementation manner of this embodiment, when the UE works in the uplink-activated and downlink-deactivated state of the secondary cell (in this case, the state of the secondary cell is the uplink-enabled and downlink-disabled state), the method may further include:

transmitting, by the serving base station for the UE and in the another cell except the secondary cell of the serving cell for the UE, feedback signaling to the UE;

or

transmitting, by the serving base station for the UE, feedback signaling to the UE in the subframe for transmitting the DRS in the secondary cell.

The feedback signaling is used to feed back whether the base station to which the secondary cell belongs correctly receives the uplink data transmitted by the UE.

After receiving the uplink data, the base station to which the secondary cell belongs demodulates the data. Acknowledgement (Acknowledgment, ACK for short) signaling is fed back to a user if the uplink data is correctly received; negative acknowledgement (Negative Acknowledgment, NACK for short) signaling is fed back to a user if receiving of the uplink data fails. The ACK signaling or the NACK signaling may be transmitted to the UE after the UE transmits the uplink data, for example, after 4 ms (the eighth subframe after the uplink grant signaling is received). When the state of the secondary cell is the uplink-enabled and downlink-enabled state, the base station to which the secondary cell belongs directly transmits the ACK signaling or the NACK signaling to the UE. Because the state of the secondary cell is the downlink-disabled state in this case, the serving base station for the UE may transmit the ACK signaling or the NACK signaling (collectively referred to as the feedback signaling, which generally has only 1 bit or 2 bits) to the UE in the foregoing manner.

The ACK signaling or the NACK signaling may be transmitted by using a physical hybrid automatic repeat-request indicator channel (Physical Hybrid automic repeat-request Indicator Channel, PHICH for short) channel, an enhanced physical hybrid automatic repeat-request indicator channel (Enhanced Physical Hybrid automic repeat-request Indicator Channel, EPHICH for short) channel, a PDCCH channel, or an EPDCCH channel. This is the prior art, and no details are described herein.

In yet another implementation manner of this embodiment, the method may further include:

obtaining, by the UE, a transmit power of the DRS;

receiving, by the UE, the DRS transmitted by the serving base station for the UE, and measuring a receive power of the DRS;

calculating, by the UE according to the transmit power of the DRS and the receive power of the DRS, a path loss for communication in the secondary cell; and

calculating, by the UE according to the path loss for communication in the secondary cell, a power for transmitting the uplink signal in the secondary cell by the UE.

Specifically, the obtaining, by the UE, a transmit power of the DRS may be receiving a transmit power instruction, of the DRS, transmitted by the serving base station for the UE; or may be directly obtaining a transmit power of a CRS from higher layer signaling when the transmit power of the DRS is the same as the transmission power (a basis in an existing calculation method) of the CRS, and then replacing the transmit power of the DRS with the transmit power of the CRS for calculation.

In an actual application, the transmit power of the DRS is transmission energy per resource element (Energy Per Resource Element, EPRE for short) of the DRS.

Optionally, the calculating, by the UE according to the transmit power of the DRS and the receive power of the DRS, a path loss for communication in the secondary cell may include:

calculating, by the UE according to formula (1), a path loss $PL_{DL}$ for transmission of the downlink signal in the secondary cell:

$$PL_{DL} = RSTP_{DRS} - RSRP_{DRS} \quad (1),$$

where

$RSTP_{DRS}$ is the transmit power of the DRS, that is, a reference signal transmission power (Reference Signal Transmission Power, RSTP for short), and $RSRP_{DRS}$ is the receive power of the DRS, that is, a reference signal receiving power (Reference Signal Receiving Power, RSRP for short).

Optionally, the calculating, by the UE according to the path loss for communication in the secondary cell, a power for transmitting the uplink signal in the secondary cell by the UE may include:

calculating, by the UE, a transmit power $P_{PUCCH}$ of a PUCCH signal according to formula (2):

$$P_{PUCCH} = \min\{P_{max}, P_0 + PL_{DL} + \Delta_{Format} + \delta\} \quad (2);$$

calculating, by the UE, a transmit power $P_{PUSCH}$ of a physical uplink shared channel (Physical Uplink Shared Channel, PUSCH for short) signal according to formula (3):

$$P_{PUSCH} = \min\{P_{max}, P_0 + \alpha * PL_{DL} + 10 * \log_{10}(M) + \Delta_{MCS} + \delta\} (3);$$

and
calculating, by the UE, a transmit power $P_{SRS}$ of an SRS according to formula (4):

$$P_{SRS} = \min\{P_{max}, P_0 + \alpha * PL_{DL} + 10 * \log_{10}(M_{SRS}) + \delta + P_{SRS0}\} \quad (4),$$

where
$\min\{*1, *2\}$ is a minimum value of $*_1$ and $*_2$, $P_{max}$ is a maximum transmit power of the UE, Po is a target power value of a signal expected by a base station, $PL_{DL}$ is a path loss for transmission of downlink data in the secondary cell, $\Delta_{Format}$ is a value for compensating PUCCHs in different formats, $\delta$ is a closed-loop power control compensation value, $\alpha$ is a path loss compensation coefficient, $\log_{10}(*)$ is a decimal logarithm of *, M is a bandwidth allocated for a PUSCH, $\Delta_{MCS}$ is a compensation value used in different modulation and coding schemes (MCS), $M_{SRS}$ is a bandwidth allocated for the SRS, and $P_{SRS0}$ is a configurable power compensation value for the SRS.

Because the path loss of the downlink signal is basically the same as the path loss of the uplink signal, generally, the UE directly replaces the path loss of the uplink signal with the path loss of the downlink signal obtained by measurement, to calculate the transmit power of the uplink signal. The method is more convenient and rapid compared with receiving the path loss of the uplink signal detected by the serving base station for the UE, and can adjust a transmit power of the UE in a more timely way regarding a change in the path loss of the uplink signal.

In the LTE system, uplink signals are classified into three types, which are respectively a PUCCH signal, a PUSCH signal, and an SRS. A PUCCH is used to transmit uplink control signaling such as ACK signaling or NACK signaling, a CQI, a PMI, or an RI. A PUSCH is used to transmit uplink data actually transmitted by a UE to a base station. An SRS is used to measure uplink channel quality. A power of any uplink signal needs to be calculated according to $PL_{DL}$.

The serving base station for the UE notifies the UE of all of Po, $\Delta_{Format}$, $\delta$, $\alpha$, M, $\Delta_{MCS}$, $M_{SRS}$, and $P_{SRS0}$. Relative to Po and $\Delta_{Format}$, the serving base station for the UE can frequently change $\delta$, so that the UE increases or decreases a transmit power at any time to quickly control the transmit power of the UE.

Step 1006: When the UE completes transmission of uplink data, the serving base station for the UE changes the state of the secondary cell, so that the state of the secondary cell is an uplink-disabled and downlink-disabled state.

Specifically, step 1006 may include:

switching, by the serving base station for the UE, the state of the secondary cell to the uplink-disabled and downlink-disabled state if the serving base station for the UE and the base station to which the secondary cell belongs are a same base station; or
transmitting, by the serving base station for the UE, a control instruction if the serving base station for the UE and the base station to which the secondary cell belongs are different base stations, where the control instruction is used to instruct the base station to which the secondary cell belongs to switch the state of the secondary cell to the uplink-disabled and downlink-disabled state.

Step 1007: The serving base station for the UE transmits uplink deactivation signaling to the UE, where the uplink deactivation signaling is used to instruct the UE to perform uplink deactivation on the secondary cell.

Step 1008: The UE performs uplink deactivation on the secondary cell according to the uplink deactivation signaling.

After performing uplink deactivation on the secondary cell, the UE specifically performs the following operations:

(1) stopping transmitting an SRS to the base station to which the secondary cell belongs;
(2) stopping measuring downlink channel quality of the secondary cell, and stopping reporting a measurement result to the base station to which the secondary cell belongs;
(3) stopping detecting a PDCCH corresponding to the secondary cell, and transmitting the uplink grant signaling by using the PDCCH; and
(4) stopping transmitting uplink data in the secondary cell.

In this embodiment of the present invention, a state of a secondary cell is changed, so that the state of the secondary cell is an uplink-enabled and downlink-disabled state. When the state of the secondary cell is the uplink-enabled and downlink-disabled state, an uplink signal can be received in the secondary cell by a base station to which the secondary cell belongs, and a downlink signal can be transmitted in the secondary cell by the base station to which the secondary cell belongs only in a subframe for transmitting a DRS. This prevents the base station to which the secondary cell belongs from still transmitting a CRS, a PCFICH signal, a PBCH signal, an SCH signal, or the like in the secondary cell to a UE at this moment, reduces power overheads of a base station, and relieves, when base stations are densely deployed, interference between cells configured for the base stations, thereby increasing a network throughput, and improving network performance.

Embodiment 11

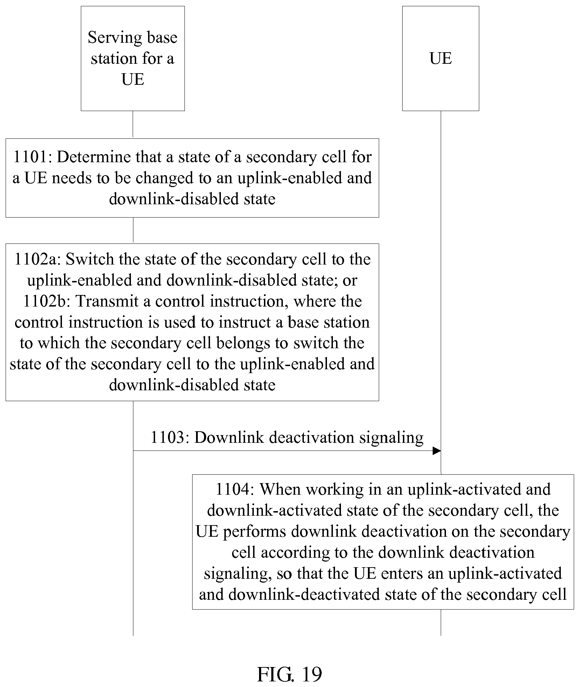

This embodiment of the present invention provides a radio resource management method. In this embodiment, an initial state of a secondary cell is an uplink-enabled and downlink-enabled state, that is, an uplink signal can be received in the secondary cell by a base station to which the secondary cell belongs, and a downlink signal can be transmitted in the secondary cell by the base station to which the secondary cell belongs. Referring to FIG. 19, the method includes the following steps.

Step 1101: A serving base station for a UE determines that a state of the secondary cell for the UE needs to be changed to an uplink-enabled and downlink-disabled state.

Specifically, step 1101 may be the same as step 1002, and no details are repeated herein.
In this embodiment, when the state of the secondary cell is the uplink-enabled and downlink-disabled state, the uplink signal that is transmitted by the UE by using the secondary cell to the base station to which the secondary cell belongs can be received by the base station to which the secondary cell belongs, and the downlink signal that is to be transmitted, to the UE by using the secondary cell, by the base station to which the secondary cell belongs can be transmitted only in a subframe for transmitting a DRS. The uplink signal includes at least one of an uplink reference signal, uplink control signaling, or uplink data. The downlink signal includes at least one of a downlink reference signal, downlink control signaling, or downlink data.
Specifically, when the state of the secondary cell is the uplink-enabled and downlink-enabled state, step 1102a is performed if the serving base station for the UE and the base station to which the secondary cell belongs are a same base station; or step 1102b is performed if the serving base station for the UE and the base station to which the secondary cell belongs are different base stations.

Step 1102a: The serving base station for the UE switches the state of the secondary cell to the uplink-enabled and downlink-disabled state.

In specific implementation, a register (buffer) in which the state of the secondary cell is set is disposed in the base station to which the secondary cell belongs. A value in the register represents the state of the secondary cell. For example, when the value in the register is 01, the state of the secondary cell is the uplink-enabled and downlink-disabled state. Because the serving base station for the UE and the base station to which the secondary cell belongs are the same base station, the serving base station for the UE can directly change the value in the register, so as to change the state of the secondary cell to the uplink-enabled and downlink-disabled state.
It should be noted that in step 1102a, when the serving base station for the UE and the base station to which the secondary cell belongs are the same base station, the serving base station for the UE may be the base station to which the primary cell belongs, or may be not the base station to which the primary cell belongs. When the serving base station for the UE is the base station to which the primary cell belongs, the base station to which the primary cell belongs and the base station to which the secondary cell belongs are the same base station. When the serving base station for the UE is not the base station to which the primary cell belongs, the base station to which the primary cell belongs and the base station to which the secondary cell belongs are different base stations.
Step 1102b: The serving base station for the UE transmits a control instruction, where the control instruction is used to instruct the base station to which the secondary cell belongs to switch the state of the secondary cell to the uplink-enabled and downlink-disabled state.

It can be understood that in step 1102b, the serving base station for the UE may be the base station to which the primary cell belongs, or may be a base station to which a secondary cell, other than the secondary cell whose state is switched, of the serving cell for the UE belongs.

It can be understood that the serving base station may change the state of the secondary cell by performing step 1102a or step 1102b, so that the state of the secondary cell is the uplink-enabled and downlink-disabled state.

Step 1103: The serving base station for the UE transmits downlink deactivation signaling to the UE, where the downlink deactivation signaling is used to instruct the UE to perform downlink deactivation on the secondary cell. Step 1103 is an optional step, and may be performed after step 1102a, or may be performed after step 1102b.

In specific implementation, after the state of the secondary cell is the uplink-enabled and downlink-disabled state (step 1102a) when the base station to which the primary cell belongs is the same as the base station to which the secondary cell belongs, the base station to which the primary cell belongs (that is, the base station to which the secondary cell belongs) can directly transmit the downlink deactivation signaling for the secondary cell to the UE. After the state of the secondary cell is the uplink-enabled and downlink-disabled state (step 1102b) when the base station to which the primary cell belongs is different from the base station to which the secondary cell belongs, the base station to which the secondary cell belongs first transmits, by using a backhaul link, the downlink deactivation signaling for the secondary cell to the base station to which the primary cell belongs, and then the base station to which the primary cell belongs transmits the downlink deactivation signaling for the secondary cell to the UE.

Step 1104: When the UE works in an uplink-activated and downlink-activated state of the secondary cell, the UE performs downlink deactivation on the secondary cell according to the downlink deactivation signaling, so that the UE enters an uplink-activated and downlink-deactivated state of the secondary cell.

In another embodiment, a secondary cell deactivation timer_uplink and a secondary cell deactivation timer_downlink may be disposed in the UE. When the UE enters the uplink-activated and downlink-activated state of the secondary cell, the UE starts both the secondary cell deactivation timer_uplink and the secondary cell deactivation timer_downlink, where a numerical value on the secondary cell deactivation timer_uplink is a specified first initial value during start-up, and a numerical value on the secondary cell deactivation timer_downlink is a specified second initial value during start-up; when the UE receives the uplink grant signaling of the secondary cell in a subframe for receiving the downlink signal, the UE resets the numerical value on the secondary cell deactivation timer_uplink to the first initial value; or when the UE receives no downlink assignment signaling of the secondary cell in a subframe for receiving the downlink signal, the UE subtracts 1 from the numerical value on the secondary cell deactivation timer_downlink; and when the numerical value on the secondary cell deactivation timer_downlink is decreased to 0, the UE performs downlink deactivation on the secondary cell, so that the UE enters the uplink-activated and downlink-deactivated state of the secondary cell.

After performing downlink deactivation on the secondary cell, the UE specifically performs the following operations:

(1) still transmitting an SRS in the secondary cell;
(2) still detecting a PDCCH signal including the uplink grant signaling;
(3) still transmitting uplink data in the secondary cell;
(4) still retaining the secondary cell deactivation timer_uplink; and
(5) stopping detecting downlink channel quality of the secondary cell, and stopping transmitting a detection result for the downlink channel quality of the secondary cell to a base station, where the detection result for the downlink channel quality of the secondary cell includes a CQI, a PMI, an RI, and a PTI.

In this embodiment of the present invention, a state of a secondary cell is changed, so that the state of the secondary cell is an uplink-enabled and downlink-disabled state. When the state of the secondary cell is the uplink-enabled and downlink-disabled state, an uplink signal can be received in the secondary cell by a base station to which the secondary cell belongs, and a downlink signal can be transmitted in the secondary cell by the base station to which the secondary cell belongs only in a subframe for transmitting a DRS. This prevents the base station to which the secondary cell belongs from still transmitting a CRS, a PCFICH signal, a PBCH signal, an SCH signal, or the like in the secondary cell to a UE at this moment, reduces power overheads of a base station, and relieves, when base stations are densely deployed, interference between cells configured for the base stations, thereby increasing a network throughput, and improving network performance.

It should be noted that when the radio resource management apparatus provided by the foregoing embodiments manages a radio resource, the division of the foregoing functional modules is only used as an example for description. In an actual application, the foregoing function allocation can be implemented by different functional modules according to a requirement, that is, an internal structure of the apparatus is divided into different functional modules to implement all or some of the foregoing functions described above. In addition, the radio resource management apparatus provided in the foregoing embodiments is based on a same concept as the embodiments illustrating the radio resource management method. For a specific implementation process, refer to the method embodiments, and no details are repeated herein.

The sequence numbers of the foregoing embodiments of the present invention are only for illustrative purposes, and are not intended to indicate priorities of the embodiments.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are only exemplary embodiments of the present invention, but are not intended to limit the present invention. Any modification, equivalent replacement, and improvement made without departing from the spirit and principle of the present invention shall fall within the protection scope of the present invention.

**Claims**

1.  A radio resource management apparatus, wherein the apparatus comprises:

    a determining module, configured to determine that a state of a secondary cell for user equipment UE needs to be changed to an uplink-enabled and downlink-disabled state; and
    a change module, configured to change the state of the secondary cell, so that the state of the secondary cell is the uplink-enabled and downlink-disabled state, wherein
    when the state of the secondary cell is the uplink-enabled and downlink-disabled state, an uplink signal that is transmitted by the UE by using the secondary cell to a base station to which the secondary cell belongs can be received by the base station to which the secondary cell belongs, and a downlink signal that is to be transmitted, to the UE by using the secondary cell, by the base station to which the secondary cell belongs can be transmitted only in a subframe for transmitting a discovery reference signal DRS, wherein the uplink signal comprises at least one of an uplink reference signal, uplink control signaling, or uplink data, and the downlink signal comprises at least one of a downlink reference signal, downlink control signaling, or downlink data.

2.  The apparatus according to claim 1, wherein the determining module comprises:

    a current-state obtaining unit, configured to obtain a current state of the secondary cell for the UE;
    a network state obtaining unit, configured to obtain a network state of a serving cell for the UE, wherein the serving cell comprises a primary cell and the secondary cell that are for the UE; and
    a determining unit, configured to determine, according to the current state of the secondary cell and the network state of the serving cell, that the state of the secondary cell needs to be changed to the uplink-enabled and downlink-disabled state.

3.  The apparatus according to claim 2, wherein the network state of the serving cell comprises one or more types of the following information:

    whether currently there is uplink data and downlink data that are to be transmitted in the secondary cell;
    volumes of uplink data and downlink data that are to be transmitted in the primary cell currently; or
    uplink interference values and downlink interference values that are transmitted in the primary cell and the secondary cell currently.

4.  The apparatus according to claim 3, wherein the determining unit is configured to:

    when the current state of the secondary cell is an uplink-disabled and downlink-disabled state, an uplink-enabled and downlink-enabled state, or an uplink-disabled and downlink-enabled state and the network state of the serving cell meets any one of the following conditions, determine that the state of the secondary cell needs to be changed to the uplink-enabled and downlink-disabled state:

currently there is uplink data to be transmitted in the secondary cell and currently there is no downlink data to be transmitted in the secondary cell;

a volume of uplink data to be transmitted in the primary cell currently is greater than or equal to an uplink transmission threshold and a volume of downlink data to be transmitted in the primary cell currently is less than a downlink transmission threshold; or

an uplink interference value transmitted in the secondary cell currently is less than an uplink interference value transmitted in the primary cell currently, and a downlink interference value transmitted in the secondary cell currently is greater than or equal to a downlink interference value transmitted in the primary cell currently.

5. The apparatus according to any one of claims 1 to 4, wherein the change module is configured to:

switch the state of the secondary cell to the uplink-enabled and downlink-disabled state if the serving base station and the base station to which the secondary cell belongs are a same base station; or

transmit a control instruction if the serving base station and the base station to which the secondary cell belongs are different base stations, wherein the control instruction is used to instruct the base station to which the secondary cell belongs to switch the state of the secondary cell to the uplink-enabled and downlink-disabled state.

6. The apparatus according to any one of claims 1 to 5, wherein the apparatus further comprises:

an uplink activation transmission module, configured to transmit uplink activation signaling to the UE, wherein the uplink activation signaling is used to instruct the UE to perform uplink activation on the secondary cell.

7. The apparatus according to any one of claims 1 to 6, wherein the apparatus further comprises:

a downlink deactivation transmission module, configured to transmit downlink deactivation signaling to the UE, wherein the downlink deactivation signaling is used to instruct the UE to perform downlink deactivation on the secondary cell.

8. The apparatus according to any one of claims 1 to 7, wherein the apparatus further comprises:

an uplink grant transmission module, configured to: when the state of the secondary cell is the uplink-enabled and downlink-disabled state, transmit, in another cell except the secondary cell of the serving cell for the UE, uplink grant signaling of the secondary cell to the UE, wherein the serving cell comprises the primary cell and the secondary cell that are for the UE; or

when the state of the secondary cell is the uplink-enabled and downlink-disabled state, transmit the uplink grant signaling to the UE in the subframe for transmitting the DRS in the secondary cell, wherein

the uplink grant signaling is used to schedule transmission of the uplink data in the secondary cell.

9. The apparatus according to any one of claims 1 to 8, wherein the apparatus further comprises:

a feedback transmission module, configured to: when the state of the secondary cell is the uplink-enabled and downlink-disabled state, transmit, in the another cell except the secondary cell of the serving cell, feedback signaling to the UE, wherein the serving cell comprises the primary cell and the secondary cell that are for the UE; or

when the state of the secondary cell is the uplink-enabled and downlink-disabled state, transmit the feedback signaling to the UE in the subframe for transmitting the DRS in the secondary cell, wherein

the feedback signaling is used to feed back whether the base station to which the secondary cell belongs correctly receives the uplink data transmitted by the UE.

10. A radio resource management apparatus, wherein the apparatus comprises:

a processor, configured to: determine that a state of a secondary cell for user equipment UE needs to be changed to an uplink-enabled and downlink-disabled state; and change the state of the secondary cell, so that the state of the secondary cell is the uplink-enabled and downlink-disabled state, wherein

when the state of the secondary cell is the uplink-enabled and downlink-disabled state, an uplink signal that is transmitted by the UE by using the secondary cell to a base station to which the secondary cell belongs can be received by the base station to which the secondary cell belongs, and a downlink signal that is to be transmitted, to the UE by using the secondary cell, by the base station to which the secondary cell belongs can be transmitted only in a subframe for transmitting a discovery reference signal DRS, wherein the uplink signal comprises at least one of an uplink reference signal, uplink control signaling, or uplink data, and the downlink signal comprises at least one of a downlink reference signal, downlink control signaling, or downlink data.

11. The apparatus according to claim 10, wherein the processor is configured to:

obtain a current state of the secondary cell for the UE;
obtain a network state of a serving cell for the UE, wherein the serving cell comprises a primary cell and the secondary cell that are for the UE; and
determine, according to the current state of the secondary cell and the network state of the serving cell, that the state of the secondary cell needs to be changed to the uplink-enabled and downlink-disabled state.

12. The apparatus according to claim 11, wherein the network state of the serving cell comprises one or more types of the following information:

whether currently there is uplink data and downlink data that are to be transmitted in the secondary cell;
volumes of uplink data and downlink data that are to be transmitted in the primary cell currently; or
uplink interference values and downlink interference values that are transmitted in the primary cell and the secondary cell currently.

13. The apparatus according to claim 12, wherein the processor is configured to:

when the current state of the secondary cell is an uplink-disabled and downlink-disabled state, an uplink-enabled and downlink-enabled state, or an uplink-disabled and downlink-enabled state and the network state of the serving cell meets any one of the following conditions, determine that the state of the secondary cell needs to be changed to the uplink-enabled and downlink-disabled state:

currently there is uplink data to be transmitted in the secondary cell and currently there is no downlink data to be transmitted in the secondary cell;
a volume of uplink data to be transmitted in the primary cell currently is greater than or equal to an uplink transmission threshold and a volume of downlink data to be transmitted in the primary cell currently is less than a downlink transmission threshold; or
an uplink interference value transmitted in the secondary cell currently is less than an uplink interference value transmitted in the primary cell currently, and a downlink interference value transmitted in the secondary cell currently is greater than or equal to a downlink interference value transmitted in the primary cell currently.

14. The apparatus according to any one of claims 10 to 13, wherein the processor is configured to:

switch the state of the secondary cell to the uplink-enabled and downlink-disabled state if the serving base station and the base station to which the secondary cell belongs are a same base station; or
transmit a control instruction if the serving base station and the base station to which the secondary cell belongs are different base stations, wherein the control instruction is used to instruct the base station to which the secondary cell belongs to switch the state of the secondary cell to the uplink-enabled and downlink-disabled state.

15. The apparatus according to any one of claims 10 to 14, wherein the apparatus further comprises:

a transmitter, configured to transmit uplink activation signaling to the UE, wherein the uplink activation signaling is used to instruct the UE to perform uplink activation on the secondary cell.

16. The apparatus according to any one of claims 10 to 15, wherein the apparatus further comprises:

the transmitter, configured to transmit downlink deactivation signaling to the UE, wherein the downlink deactivation signaling is used to instruct the UE to perform downlink deactivation on the secondary cell.

17. The apparatus according to any one of claims 10 to 16, wherein the apparatus further comprises:

the transmitter, configured to: when the state of the secondary cell is the uplink-enabled and downlink-disabled state, transmit, in another cell except the secondary cell of the serving cell for the UE, uplink grant signaling of the secondary cell to the UE, wherein the serving cell comprises the primary cell and the secondary cell that are for the UE; or

when the state of the secondary cell is the uplink-enabled and downlink-disabled state, transmit the uplink grant signaling to the UE in the subframe for transmitting the DRS in the secondary cell, wherein

the uplink grant signaling is used to schedule transmission of the uplink data in the secondary cell.

18. The apparatus according to any one of claims 10 to 17, wherein the apparatus further comprises:

the transmitter, configured to: when the state of the secondary cell is the uplink-enabled and downlink-disabled state, transmit, in the another cell except the secondary cell of the serving cell, feedback signaling to the UE, wherein the serving cell comprises the primary cell and the secondary cell that are for the UE; or

when the state of the secondary cell is the uplink-enabled and downlink-disabled state, transmit the feedback signaling to the UE in the subframe for transmitting the DRS in the secondary cell, wherein

the feedback signaling is used to feed back whether the base station to which the secondary cell belongs correctly receives the uplink data transmitted by the UE.

19. A radio resource management apparatus, wherein the apparatus comprises:

an uplink activation receiving module, configured to: when user equipment UE works in an uplink-deactivated and downlink-deactivated state of a secondary cell, receive uplink activation signaling transmitted by a serving base station for the UE; and

an uplink activation module, configured to perform uplink activation on the secondary cell for the UE according to the uplink activation signaling, so that the UE works in an uplink-activated and downlink-deactivated state of the secondary cell;

or

a downlink deactivation receiving module, configured to: when the UE works in an uplink-activated and downlink-activated state of a secondary cell, receive downlink deactivation signaling transmitted by the serving base station; and

a downlink deactivation module, configured to perform downlink deactivation on the secondary cell according to the downlink deactivation signaling, so that the UE works in an uplink-activated and downlink-deactivated state of the secondary cell;

or

a downlink deactivation module, configured to: when the UE works in an uplink-activated and downlink-activated state of a secondary cell, perform downlink deactivation on the secondary cell if the UE receives uplink grant signaling of the secondary cell and no downlink assignment signaling of the secondary cell within a specified time, so that the UE works in an uplink-activated and downlink-deactivated state of the secondary cell, wherein the uplink grant signaling is used to schedule transmission of uplink data in the secondary cell, and the downlink assignment signaling is used to schedule receiving of downlink data in the secondary cell, wherein

when the UE works in the uplink-activated and downlink-deactivated state of the secondary cell, an uplink signal that is to be transmitted by the UE by using the secondary cell to a base station to which the secondary cell belongs can be transmitted, and a downlink signal that is transmitted, to the UE by using the secondary cell, by the base station to which the secondary cell belongs can be received by the UE only in a subframe for transmitting a discovery reference signal DRS, wherein the uplink signal comprises at least one of an uplink reference signal, uplink control signaling, or the uplink data, and the downlink signal comprises at least one of a downlink reference signal, downlink control signaling, or the downlink data.

20. The apparatus according to claim 19, wherein the downlink deactivation module is configured to:

when the UE enters the uplink-activated and downlink-activated state of the secondary cell, start both a secondary cell deactivation timer_uplink and a secondary cell deactivation timer_downlink, wherein a numerical value on the secondary cell deactivation timer_uplink is a specified first initial value during start-up, and a numerical value on the secondary cell deactivation timer_downlink is a specified second initial value during start-up;

when the UE receives the uplink grant signaling in a subframe for receiving the downlink signal, reset the numerical value on the secondary cell deactivation timer_uplink to the first initial value; or

when the UE receives no downlink assignment signaling in the subframe for receiving the downlink signal, subtract 1 from the numerical value on the secondary cell deactivation timer_downlink; and

when the numerical value on the secondary cell deactivation timer_downlink is decreased to 0, perform downlink deactivation on the secondary cell.

**21.** The apparatus according to claim 19 or 20, wherein the apparatus further comprises:

an uplink deactivation module, configured to: when the UE enters the uplink-activated and downlink-deactivated state of the secondary cell, start a secondary cell deactivation timer_uplink, wherein a numerical value on the secondary cell deactivation timer_uplink is a specified first initial value during start-up;
when the UE receives the uplink grant signaling in a subframe for receiving the downlink signal, reset the numerical value on the secondary cell deactivation timer_uplink to the first initial value; or
when the UE receives no uplink grant signaling in a subframe for receiving the downlink signal, subtract 1 from the numerical value on the secondary cell deactivation timer_uplink; and
when the numerical value on the secondary cell deactivation timer_uplink is decreased to 0, perform downlink deactivation on the secondary cell.

**22.** The apparatus according to any one of claims 19 to 21, wherein the apparatus further comprises:

an uplink grant receiving module, configured to: when the UE works in the uplink-activated and downlink-deactivated state of the secondary cell, receive, in another cell except the secondary cell of a serving cell for the UE, uplink grant signaling transmitted by the serving base station, wherein the serving cell comprises a primary cell and the secondary cell that are for the UE; or
when the UE works in the uplink-activated and downlink-deactivated state of the secondary cell, receive the uplink grant signaling in the subframe for transmitting the DRS in the secondary cell.

**23.** The apparatus according to any one of claims 19 to 22, wherein the apparatus further comprises:

a feedback receiving module, configured to: when the UE works in the uplink-activated and downlink-deactivated state of the secondary cell, receive, in the another cell except the secondary cell of the serving cell for the UE, feedback signaling transmitted by the serving base station, wherein the serving cell comprises the primary cell and the secondary cell that are for the UE; or
when the UE works in the uplink-activated and downlink-deactivated state of the secondary cell, receive the feedback signaling in the subframe for transmitting the DRS in the secondary cell, wherein
the feedback signaling is used to feed back whether the base station to which the secondary cell belongs correctly receives the uplink data transmitted by the UE.

**24.** The apparatus according to any one of claims 19 to 23, wherein the apparatus further comprises:

a transmit power obtaining module, configured to: when the UE works in the uplink-activated and downlink-deactivated state of the secondary cell, obtain a transmit power of the DRS;
a receive power measurement module, configured to: receive the DRS transmitted by the serving base station for the UE, and measure a receive power of the DRS;
a loss calculation module, configured to calculate, according to the transmit power of the DRS and the receive power of the DRS, a path loss for communication in the secondary cell; and
a power calculation module, configured to calculate, according to the path loss for communication in the secondary cell, a power for transmitting the uplink signal by the UE.

**25.** A radio resource management apparatus, wherein the apparatus comprises:

a receiver, configured to: when user equipment UE works in an uplink-deactivated and downlink-deactivated state of a secondary cell, receive uplink activation signaling transmitted by a serving base station for the UE; and
a processor, configured to perform uplink activation on the secondary cell for the UE according to the uplink activation signaling, so that the UE works in an uplink-activated and downlink-deactivated state of the secondary cell;
or
a receiver, configured to: when the UE works in an uplink-activated and downlink-activated state of a secondary cell, receive downlink deactivation signaling transmitted by the serving base station; and
a processor, configured to perform downlink deactivation on the secondary cell according to the downlink deactivation signaling, so that the UE works in an uplink-activated and downlink-deactivated state of the secondary cell;
or
a processor, configured to: when the UE works in an uplink-activated and downlink-activated state of a secondary cell, perform downlink deactivation on the secondary cell if the UE receives uplink grant signaling of the secondary cell and no downlink assignment signaling of the secondary cell within a specified time, so that the UE works in an uplink-activated and downlink-deactivated state of the secondary cell, wherein the uplink grant signaling is used to schedule transmission of uplink data in the secondary cell, and the downlink assignment signaling is used to schedule receiving of downlink data in the secondary cell, wherein

when the UE works in the uplink-activated and downlink-deactivated state of the secondary cell, an uplink signal that is to be transmitted by the UE by using the secondary cell to a base station to which the secondary cell belongs can be transmitted, and a downlink signal that is transmitted, to the UE by using the secondary cell, by the base station to which the secondary cell belongs can be received by the UE only in a subframe for transmitting a discovery reference signal DRS, wherein the uplink signal comprises at least one of an uplink reference signal, uplink control signaling, or the uplink data, and the downlink signal comprises at least one of a downlink reference signal, downlink control signaling, or the downlink data.

26. The apparatus according to claim 25, wherein the processor is configured to:

when the UE enters the uplink-activated and downlink-activated state of the secondary cell, start both a secondary cell deactivation timer_uplink and a secondary cell deactivation timer_downlink, wherein a numerical value on the secondary cell deactivation timer_uplink is a specified first initial value during start-up, and a numerical value on the secondary cell deactivation timer_downlink is a specified second initial value during start-up;

when the UE receives the uplink grant signaling in a subframe for receiving the downlink signal, reset the numerical value on the secondary cell deactivation timer_uplink to the first initial value; or

when the UE receives no downlink assignment signaling in the subframe for receiving the downlink signal, subtract 1 from the numerical value on the secondary cell deactivation timer_downlink; and

when the numerical value on the secondary cell deactivation timer_downlink is decreased to 0, perform downlink deactivation on the secondary cell.

27. The apparatus according to claim 25 or 26, wherein the processor is further configured to:

when the UE enters the uplink-activated and downlink-deactivated state of the secondary cell, start a secondary cell deactivation timer_uplink, wherein a numerical value on the secondary cell deactivation timer_uplink is a specified first initial value during start-up;

when the UE receives the uplink grant signaling in a subframe for receiving the downlink signal, reset the numerical value on the secondary cell deactivation timer_uplink to the first initial value; or

when the UE receives no uplink grant signaling in a subframe for receiving the downlink signal, subtract 1 from the numerical value on the secondary cell deactivation timer_uplink; and

when the numerical value on the secondary cell deactivation timer_uplink is decreased to 0, perform downlink deactivation on the secondary cell.

28. The apparatus according to any one of claims 25 to 27, wherein the receiver is further configured to:

when the UE works in the uplink-activated and downlink-deactivated state of the secondary cell, receive, in another cell except the secondary cell of a serving cell for the UE, uplink grant signaling transmitted by the serving base station, wherein the serving cell comprises a primary cell and the secondary cell that are for the UE; or

when the UE works in the uplink-activated and downlink-deactivated state of the secondary cell, receive the uplink grant signaling in the subframe for transmitting the DRS in the secondary cell.

29. The apparatus according to any one of claims 25 to 28, wherein the receiver is further configured to:

when the UE works in the uplink-activated and downlink-deactivated state of the secondary cell, receive, in the another cell except the secondary cell of the serving cell for the UE, feedback signaling transmitted by the serving base station, wherein the serving cell comprises the primary cell and the secondary cell that are for the UE; or

when the UE works in the uplink-activated and downlink-deactivated state of the secondary cell, receive the feedback signaling in the subframe for transmitting the DRS in the secondary cell, wherein

the feedback signaling is used to feed back whether the base station to which the secondary cell belongs correctly receives the uplink data transmitted by the UE.

30. The apparatus according to any one of claims 25 to 29, wherein the processor is further configured to: when the UE works in the uplink-activated and downlink-deactivated state of the secondary cell, obtain a transmit power of the DRS;

the receiver is further configured to receive the DRS transmitted by the serving base station for the UE; and

the processor is further configured to: measure a receive power of the DRS, and calculate, according to the transmit power of the DRS and the receive power of the DRS, a path loss for communication in the secondary cell; and calculate, according to the path loss for communication in the secondary cell, a power for transmitting the uplink signal by the UE.

31. A radio resource management system, wherein the system comprises the radio resource management apparatus according to any one of claims 1 to 9 and the radio resource management apparatus according to any one of claims 19 to 24.

32. A radio resource management method, wherein the method comprises:

determining, by a serving base station for user equipment UE, that a state of a secondary cell for the UE needs to be changed to an uplink-enabled and downlink-disabled state; and

changing, by the serving base station, the state of the secondary cell, so that the state of the secondary cell is the uplink-enabled and downlink-disabled state, wherein

when the state of the secondary cell is the uplink-enabled and downlink-disabled state, an uplink signal that is transmitted by the UE by using the secondary cell to a base station to which the secondary cell belongs can be received by the base station to which the secondary cell belongs, and a downlink signal that is to be transmitted, to the UE by using the secondary cell, by the base station to which the secondary cell belongs can be transmitted only in a subframe for transmitting a discovery reference signal DRS, wherein the uplink signal comprises at least one of an uplink reference signal, uplink control signaling, or uplink data, and the downlink signal comprises at least one of a downlink reference signal, downlink control signaling, or downlink data.

33. The method according to claim 32, wherein the determining, by a serving base station for user equipment UE, that a state of a secondary cell for the UE needs to be changed to an uplink-enabled and downlink-disabled state comprises:

obtaining, by the serving base station for the UE, a current state of the secondary cell for the UE;

obtaining, by the serving base station, a network state of a serving cell for the UE, wherein the serving cell comprises a primary cell and the secondary cell that are for the UE; and

determining, by the serving base station according to the current state of the secondary cell and the network state of the serving cell, that the state of the secondary cell needs to be changed to the uplink-enabled and downlink-disabled state.

34. The method according to claim 33, wherein the network state of the serving cell comprises one or more types of the following information:

whether currently there is uplink data and downlink data that are to be transmitted in the secondary cell;

volumes of uplink data and downlink data that are to be transmitted in the primary cell currently; or

uplink interference values and downlink interference values that are transmitted in the primary cell and the secondary cell currently.

35. The method according to claim 34, wherein the determining, by the serving base station according to the current state of the secondary cell and the network state of the serving cell, that the state of the secondary cell needs to be changed to the uplink-enabled and downlink-disabled state comprises:

when the current state of the secondary cell is an uplink-disabled and downlink-disabled state, an uplink-enabled and downlink-enabled state, or an uplink-disabled and downlink-enabled state and the network state of the serving cell meets any one of the following conditions, determining that the state of the secondary cell needs to be changed to the uplink-enabled and downlink-disabled state:

currently there is uplink data to be transmitted in the secondary cell and currently there is no downlink data to be transmitted in the secondary cell;

a volume of uplink data to be transmitted in the primary cell currently is greater than or equal to an uplink transmission threshold and a volume of downlink data to be transmitted in the primary cell currently is less than a downlink transmission threshold; or

an uplink interference value transmitted in the secondary cell currently is less than an uplink interference value transmitted in the primary cell currently, and a downlink interference value transmitted in the secondary cell currently is greater than or equal to a downlink interference value transmitted in the primary cell currently.

36. The method according to any one of claims 32 to 35, wherein the changing, by the serving base station, the state of the secondary cell, so that the state of the secondary cell is the uplink-enabled and downlink-disabled state, comprises:

switching, by the serving base station, the state of the secondary cell to the uplink-enabled and downlink-disabled state if the serving base station and the base station to which the secondary cell belongs are a same base station;
or
transmitting, by the serving base station, a control instruction if the serving base station and the base station to which the secondary cell belongs are different base stations, wherein the control instruction is used to instruct the base station to which the secondary cell belongs to switch the state of the secondary cell to the uplink-enabled and downlink-disabled state.

37. The method according to any one of claims 32 to 36, wherein the method further comprises:

transmitting, by the serving base station, uplink activation signaling to the UE, wherein the uplink activation signaling is used to instruct the UE to perform uplink activation on the secondary cell.

38. The method according to any one of claims 32 to 37, wherein the method further comprises:

transmitting, by the serving base station, downlink deactivation signaling to the UE, wherein the downlink deactivation signaling is used to instruct the UE to perform downlink deactivation on the secondary cell.

39. The method according to any one of claims 32 to 38, wherein when the state of the secondary cell is the uplink-enabled and downlink-disabled state, the method further comprises:

transmitting, by the serving base station and in another cell except the secondary cell of the serving cell for the UE, uplink grant signaling of the secondary cell to the UE, wherein the serving cell comprises the primary cell and the secondary cell that are for the UE; or
transmitting, by the serving base station, the uplink grant signaling to the UE in the subframe for transmitting the DRS in the secondary cell, wherein
the uplink grant signaling is used to schedule transmission of the uplink data in the secondary cell.

40. The method according to any one of claims 32 to 39, wherein when the state of the secondary cell is the uplink-enabled and downlink-disabled state, the method further comprises:

transmitting, by the serving base station and in the another cell except the secondary cell of the serving cell, feedback signaling to the UE, wherein the serving cell comprises the primary cell and the secondary cell that are for the UE; or
transmitting, by the serving base station, the feedback signaling to the UE in the subframe for transmitting the DRS in the secondary cell, wherein
the feedback signaling is used to feed back whether the base station to which the secondary cell belongs correctly receives the uplink data transmitted by the UE.

41. A radio resource management method, wherein the method comprises:

receiving, by user equipment UE when the UE works in an uplink-deactivated and downlink-deactivated state of a secondary cell, uplink activation signaling transmitted by a serving base station for the UE; and
performing, by the UE, uplink activation on the secondary cell for the UE according to the uplink activation signaling, so that the UE works in an uplink-activated and downlink-deactivated state of the secondary cell;
or
receiving, by the UE when the UE works in an uplink-activated and downlink-activated state of a secondary cell, downlink deactivation signaling transmitted by the serving base station; and

performing, by the UE, downlink deactivation on the secondary cell according to the downlink deactivation signaling, so that the UE works in an uplink-activated and downlink-deactivated state of the secondary cell; or

performing, by the UE when the UE works in an uplink-activated and downlink-activated state of a secondary cell, downlink deactivation on the secondary cell if the UE receives uplink grant signaling of the secondary cell and no downlink assignment signaling of the secondary cell within a specified time, so that the UE works in an uplink-activated and downlink-deactivated state of the secondary cell, wherein the uplink grant signaling is used to schedule transmission of uplink data in the secondary cell, and the downlink assignment signaling is used to schedule receiving of downlink data in the secondary cell, wherein

when the UE works in the uplink-activated and downlink-deactivated state of the secondary cell, an uplink signal that is to be transmitted by the UE by using the secondary cell to a base station to which the secondary cell belongs can be transmitted, and a downlink signal that is transmitted, to the UE by using the secondary cell, by the base station to which the secondary cell belongs can be received by the UE only in a subframe for transmitting a discovery reference signal DRS, wherein the uplink signal comprises at least one of an uplink reference signal, uplink control signaling, or the uplink data, and the downlink signal comprises at least one of a downlink reference signal, downlink control signaling, or the downlink data.

42. The method according to claim 41, wherein the performing, by the UE when the UE works in an uplink-activated and downlink-activated state of a secondary cell, downlink deactivation on the secondary cell if the UE receives uplink grant signaling of the secondary cell and no downlink assignment signaling of the secondary cell within a specified time comprises:

when the UE enters the uplink-activated and downlink-activated state of the secondary cell, starting, by the UE, both a secondary cell deactivation timer_uplink and a secondary cell deactivation timer_downlink, wherein a numerical value on the secondary cell deactivation timer_uplink is a specified first initial value during start-up, and a numerical value on the secondary cell deactivation timer_downlink is a specified second initial value during start-up;

when the UE receives the uplink grant signaling in a subframe for receiving the downlink signal, resetting, by the UE, the numerical value on the secondary cell deactivation timer_uplink to the first initial value; or

when the UE receives no downlink assignment signaling in a subframe for receiving the downlink signal, subtracting, by the UE, 1 from the numerical value on the secondary cell deactivation timer_downlink; and

when the numerical value on the secondary cell deactivation timer_downlink is decreased to 0, performing, by the UE, downlink deactivation on the secondary cell.

43. The method according to claim 41 or 42, wherein when the UE enters the uplink-activated and downlink-deactivated state of the secondary cell, the method further comprises:

starting, by the UE, a secondary cell deactivation timer_uplink, wherein a numerical value on the secondary cell deactivation timer_uplink is a specified first initial value during start-up;

when the UE receives the uplink grant signaling in a subframe for receiving the downlink signal, resetting, by the UE, the numerical value on the secondary cell deactivation timer_uplink to the first initial value; or

when the UE receives no uplink grant signaling in a subframe for receiving the downlink signal, subtracting, by the UE, 1 from the numerical value on the secondary cell deactivation timer_uplink; and

when the numerical value on the secondary cell deactivation timer_uplink is decreased to 0, performing, by the UE, downlink deactivation on the secondary cell.

44. The method according to any one of claims 41 to 43, wherein when the UE works in the uplink-activated and downlink-deactivated state of the secondary cell, the method further comprises:

receiving, by the UE and in another cell except the secondary cell of a serving cell for the UE, uplink grant signaling transmitted by the serving base station, wherein the serving cell comprises a primary cell and the secondary cell that are for the UE; or

receiving, by the UE, the uplink grant signaling in the subframe for transmitting the DRS in the secondary cell.

45. The method according to any one of claims 41 to 44, wherein when the UE works in the uplink-activated and downlink-deactivated state of the secondary cell, the method further comprises:

receiving, by the UE and in the another cell except the secondary cell of the serving cell for the UE, feedback signaling transmitted by the serving base station, wherein the serving cell comprises the primary cell and the secondary cell that are for the UE; or

receiving, by the UE, the feedback signaling in the subframe for transmitting the DRS in the secondary cell, wherein

the feedback signaling is used to feed back whether the base station to which the secondary cell belongs correctly receives the uplink data transmitted by the UE.

**46.** The method according to any one of claims 41 or 45, wherein when the UE works in the uplink-activated and downlink-deactivated state of the secondary cell, the method further comprises:

obtaining, by the UE, a transmit power of the discovery reference signal DRS;

receiving, by the UE, the DRS transmitted by the serving base station for the UE, and measuring a receive power of the DRS;

calculating, by the UE according to the transmit power of the DRS and the receive power of the DRS, a path loss for communication in the secondary cell; and

calculating, by the UE according to the path loss for communication in the secondary cell, a power for transmitting the uplink signal by the UE.

101

102

Determining
module

Change
module

FIG. 1

203

204

Uplink
activation
transmission
module

Downlink
deactivation
transmission
module

201

202

Determining
module

Change
module

206

205

Feedback
transmission
module

Uplink grant
transmission
module

FIG. 2

<u>30</u>

34

Processor

33

Memory

35

31

Transmitter

32

Receiver

FIG. 3

401

Uplink activation receiving module

402

Uplink activation module

FIG. 4

403

Downlink deactivation receiving module

404

Downlink deactivation module

FIG. 5

405

Downlink
deactivation
module

FIG. 6

506

Uplink
deactivation
module

507

Uplink grant
receiving
module

501

Uplink
activation
receiving
module

502

Uplink
activation
module

508

Feedback
receiving
module

509

Transmit power
obtaining module

510

Receive power
measurement
module

511

Loss
calculation
module

512

Power
calculation
module

FIG. 7

FIG. 8

FIG. 9

<u>60</u>

64

Processor

63

Memory

65

61

Transmitter

62

Receiver

FIG. 10

701

702

Radio resource
management
apparatus

Radio resource
management
apparatus

FIG. 11

FIG. 12

FIG. 13

801

A serving base station for a UE determines that a state of a secondary cell for the UE needs to be changed to an uplink-enabled and downlink-disabled state

802

The serving base station for the UE changes the state of the secondary cell, so that the state of the secondary cell is the uplink-enabled and downlink-disabled state

FIG. 14

901

When a UE works in an uplink-activated and downlink-activated state of a secondary cell, the UE receives uplink activation signaling transmitted by a serving base station for the UE

902

The UE performs uplink activation on the secondary cell for the UE according to the uplink activation signaling, so that the UE works in an uplink-activated and downlink-deactivated state of the secondary cell

FIG. 15

903

When a UE works in an uplink-activated and downlink-activated state of a secondary cell, the UE receives downlink deactivation signaling of the UE transmitted by a serving base station for the UE

904

The UE performs downlink deactivation on the secondary cell according to the downlink deactivation signaling, so that the UE works in an uplink-activated and downlink-deactivated state of the secondary cell

FIG. 16

905

When a UE works in an uplink-activated and downlink-activated state of a secondary cell, the UE performs downlink deactivation on the secondary cell if the UE receives uplink grant signaling of the secondary cell and no downlink assignment signaling of the secondary cell within a specified time, so that the UE works in an uplink-activated and downlink-deactivated state of the secondary cell

FIG. 17

```
┌─────────────┐                          ┌─────────────┐
│ Serving base│                          │             │
│ station for a│                         │     UE      │
│     UE      │                          │             │
└─────────────┘                          └─────────────┘
```

1001: Configuration
information of a secondary cell

1002: Determine that a state of the secondary cell for a UE
needs to be changed to an uplink-enabled and downlink-
disabled state

1003a: Switch the state of the secondary cell to the uplink-
enabled and downlink-disabled state; or
1003b: Transmit a control instruction, where the control
instruction is used to instruct a base station to which the
secondary cell belongs to switch the state of the secondary
cell to the uplink-enabled and downlink-disabled state

1004: Uplink activation signaling

1005: When working in an uplink-deactivated and
downlink-deactivated state of the secondary cell,
the UE performs uplink activation on the secondary
cell according to the uplink activation signaling, so
that the UE enters an uplink-activated and
downlink-deactivated state of the secondary cell

1006: When the UE completes transmission of uplink data,
change the state of the secondary cell, so that the state of the
secondary cell is an uplink-disabled and downlink-disabled
state

1007: Uplink deactivation signaling

1008: Perform uplink deactivation on
the secondary cell according to the
uplink deactivation signaling

FIG. 18

```
┌─────────────┐                              ┌─────────────┐
│ Serving base│                              │             │
│ station for a│                             │     UE      │
│     UE      │                              │             │
└─────────────┘                              └─────────────┘
       │                                            │
┌──────┴──────────────────────────────┐            │
│ 1101: Determine that a state of a    │            │
│ secondary cell for a UE needs to be  │            │
│ changed to an uplink-enabled and     │            │
│ downlink-disabled state              │            │
└──────┬───────────────────────────────┘           │
       │                                            │
┌──────┴───────────────────────────────┐           │
│ 1102a: Switch the state of the       │            │
│ secondary cell to the uplink-enabled │            │
│ and downlink-disabled state; or      │            │
│ 1102b: Transmit a control instruction,│           │
│ where the control instruction is used│            │
│ to instruct a base station to which  │            │
│ the secondary cell belongs to switch │            │
│ the state of the secondary cell to   │            │
│ the uplink-enabled and               │            │
│ downlink-disabled state              │            │
└──────┬───────────────────────────────┘           │
       │  1103: Downlink deactivation signaling     │
       │───────────────────────────────────────────▶│
       │                                   ┌─────────┴──────────────┐
       │                                   │ 1104: When working in  │
       │                                   │ an uplink-activated and│
       │                                   │ downlink-activated     │
       │                                   │ state of the secondary │
       │                                   │ cell, the UE performs  │
       │                                   │ downlink deactivation  │
       │                                   │ on the secondary cell  │
       │                                   │ according to the       │
       │                                   │ downlink deactivation  │
       │                                   │ signaling, so that the │
       │                                   │ UE enters an uplink-   │
       │                                   │ activated and downlink-│
       │                                   │ deactivated state of   │
       │                                   │ the secondary cell     │
       │                                   └─────────┬──────────────┘
       │                                            │
```

FIG. 19

# INTERNATIONAL SEARCH REPORT

| | International application No. |
|---|---|
| | PCT/CN2014/089852 |

**A. CLASSIFICATION OF SUBJECT MATTER**

H04W 24/08 (2009.01) i

According to International Patent Classification (IPC) or to both national classification and IPC

**B. FIELDS SEARCHED**

Minimum documentation searched (classification system followed by classification symbols)

IPC: H04L; H04W; H04Q; G06F

Documentation searched other than minimum documentation to the extent that such documents are included in the fields searched

Electronic data base consulted during the international search (name of data base and, where practicable, search terms used)

CPRSABS; CNTXT; SIPOABS; CNKI; DWPI; VEN: LTE, CA, SCell, DRS, carrier w aggregation, Secondary Cell, change, state, activation, deactivation, downlink, uplink, resource, cost, discovery w reference w signal

**C. DOCUMENTS CONSIDERED TO BE RELEVANT**

| Category* | Citation of document, with indication, where appropriate, of the relevant passages | Relevant to claim No. |
|---|---|---|
| A | CN 104080117 A (WUHAN HONGXIN TELECOM TECHNOLOGIES CO., LTD.) 01 October 2014 (01.10.2014) the whole document | 1-46 |
| A | CN 102244927 A (NEW POST COMMUNICATION EQUIP CO., LTD.) 16 November 2011 (16.11.2011) the whole document | 1-46 |
| A | CN 104066160 A (POTEVIO INST TECHNOLOGY CO., LTD.) 24 September 2014 (24.09.2014) the whole document | 1-46 |
| A | WO 2012134534 A1 (INTEL CORP. et al.) 04 October 2012 (04.10.2012) the whole document | 1-46 |
| A | US 2012281680 A1 (BOSTROEM LISA et al.) 08 November 2012 (08.11.2012) the whole document | 1-46 |

☐ Further documents are listed in the continuation of Box C.        ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 18 June 2015 | 23 July 2015 |

| Name and mailing address of the ISA State Intellectual Property Office of the P. R. China No. 6, Xitucheng Road, Jimenqiao Haidian District, Beijing 100088, China Facsimile No. (86-10) 62019451 | Authorized officer LIU, Yongzhe Telephone No. (86-10) 62412024 |

Form PCT/ISA /210 (second sheet) (July 2009)

INTERNATIONAL SEARCH REPORT
Information on patent family members

International application No.

PCT/CN2014/089852

| Patent Documents referred in the Report | Publication Date | Patent Family | Publication Date |
|---|---|---|---|
| CN 104080117 A | 01 October 2014 | None | |
| CN 102244927 A | 16 November 2011 | CN 102244927 B | 28 January 2015 |
| CN 104066160 A | 24 September 2014 | None | |
| WO 2012134534 A1 | 04 October 2012 | US 2014369322 A1 | 18 December 2014 |
| | | EP 2695454 A1 | 12 February 2014 |
| | | CN 103583071 A | 12 February 2014 |
| | | EP 2695454 A4 | 22 April 2015 |
| US 2012281680 A1 | 08 November 2012 | EP 2705625 A1 | 12 March 2014 |
| | | US 8995352 B2 | 31 March 2015 |
| | | WO 2012150886 A1 | 08 November 2012 |
| | | MX 2013012566 A | 21 November 2013 |
| | | US 8743787 B2 | 03 June 2014 |
| | | EP 2705625 B1 | 18 March 2015 |
| | | CN 103814543 A | 21 May 2014 |
| | | US 2014233489 A1 | 21 August 2014 |
| | | AU 2011367239 A1 | 07 November 2013 |
| | | IN 201301926 P3 | 12 September 2014 |
| | | MX 323525 B | 09 September 2014 |

Form PCT/ISA /210 (patent family annex) (July 2009)